# EUROPEAN PATENT SPECIFICATION

(11) **EP 2 765 881 B1**
(45) Date of publication and mention of the grant of the patent: **23.11.2016**
(21) Application number: 12839338.6
(22) Date of filing: 10.10.2012
(51) Int. Cl.: A43B 7/32, A43B 13/18, A43B 23/02, A43B 1/00, A43B 3/00, A43B 7/00, A43B 7/14, A43B 9/04, A43B 23/22, B29D 35/00, B29D 35/14

(54) **WELT-FRAME CONSTRUCTION AND PROTECTION DEVICES FOR USE IN SHOES**
KEDERKONSTRUKTION UND SCHUTZVORRICHTUNGEN ZUR VERWENDUNG FÜR SCHUHE
CONSTRUCTION DE CADRE DE TRÉPOINTE ET DISPOSITIFS DE PROTECTION POUR L'UTILISATION DANS DES CHAUSSURES

(30) Priority: 10.10.2011 US 201161545317 P; 26.06.2012 US 201261664217 P
(43) Date of publication of application: 20.08.2014
(60) Divisional application: 16180867.0
(73) Proprietor: TBL Licensing LLC, Wilmington, DE 19808 (US)
(72) Inventor: SPILLER, Bert, Appleton, Dover, NH 03820 (US); NORTON, Denis, W., Plymouth, MN 55441 (US); AMMON, Stephen, D., Merrimac, MA 01860 (US)
(74) Representative: D Young & Co LLP
(86) International application number: PCT/US2012/059562
(87) International publication number: WO 2013/055796

(56) References cited:
- WO-A1-00/64292
- WO-A1-2011/050373
- US-A- 1 973 105
- US-A- 4 333 248
- US-A- 4 535 553
- US-A1- 2003 101 620
- US-A1- 2003 101 620
- US-A1- 2003 150 131
- US-A1- 2003 150 131

## Description

### BACKGROUND OF THE INVENTION

The present invention relates generally to articles of footwear, and in particular to articles of footwear having a cushioning support system suitable for use in a welted shoe. The present application relates, in general, to protection devices for use in shoes, and specifically to metatarsal or other protection devices for shielding a user's foot from injury. The state of the art related to the aforementioned invention is addressed in turn below. US 2003/0101620 A1 discloses a cushioning support system.

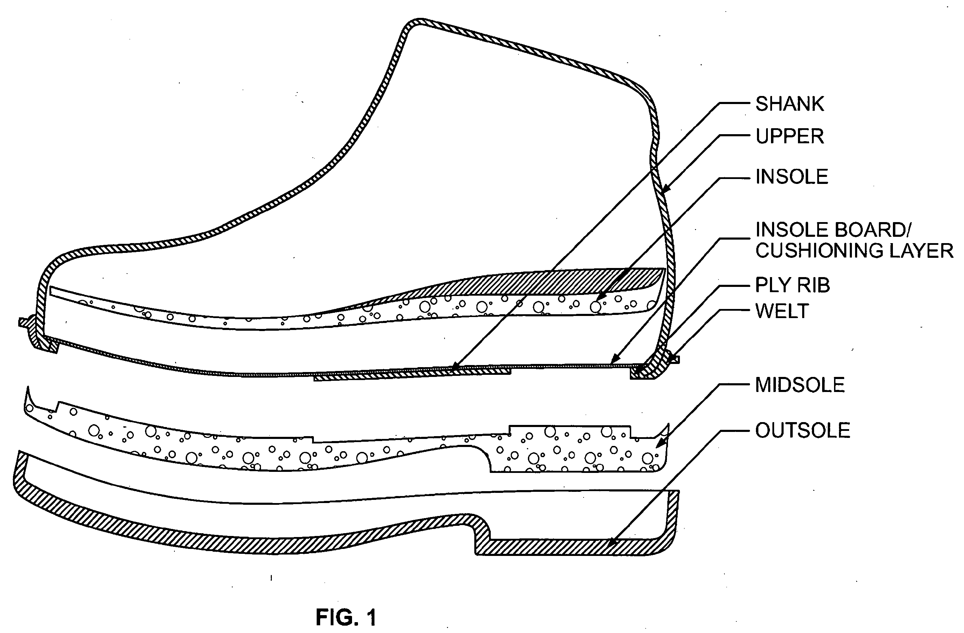

Traditional Goodyear welted shoes, an example of which is found in Fig. 1, typically utilize an upper connected to a midsole component through the use of a welt, *e.g.,* a strip of leather, rubber, or plastic that is stitched to the upper and midsole component. The midsole component, in some welt constructions, may include a cushioning layer that is attached to a stiff insole board made of non-woven and/or cellulose material. As shown in Fig. 1, such insole boards may also overly or rest on top of the aforementioned cushioning layer. Thus, a stiff material (e.g., the insole board) is usually disposed between the foot of a user and the cushioning material in some welt constructions. Additionally, while in this type of footwear construction the upper and midsole may be connected together by stitching, an outsole is usually attached to the midsole through the use of a high strength adhesive. The result is a relatively firm, but nevertheless workable piece of footwear, which will eventually mold to the wearer's foot. Welted shoes of this sort have been commonly sold in the footwear industry, since the outsole can be easily replaced and the upper and welt components saved for re-use.

Various techniques for constructing welted shoes of the type described above have also been developed. As one example, a piece of an upper may first be secured to a portion of a welt-frame, such as a flange extending about a bottom surface of the welt construction (*e.g*., the "ply rib" of Fig. 1), via a staple or other connection mechanism. After initially securing the upper to the welt-frame, a welt, in the form of a strip of leather, rubber, or plastic, may then be stitched over the upper and into the flange portion of the welt-frame, thus securing the upper to the welt-frame. This flange portion (*e.g*., the ply rib) may also be attached to a stiff insole board, which may be a single or dual layered material. Additionally, an insole may be placed over the insole board and an outsole may be placed over a midsole portion of the welt construction.

Particular geometries used with the aforementioned midsole have also been developed, in which a series of cones is formed into the midsole. In this midsole construction, however, a stiff insole board overlies a top surface of the midsole and is cemented thereto. Cushioning potential is, as a result, lost, since a series of cones cannot be formed into a top surface of the midsole (*e.g*., the surface which comes into contact with the insole board). The stiff insole board is also typically disposed between a user's foot and the midsole, thus resulting in further loss of cushioning potential. What's more, the multitude of components used with the aforementioned welt construction serves to increase the stiffness of the shoe and provide for a complicated construction. As such, much is wasted in the way of manufacturing costs.

Turning to protection devices for shielding the metatarsal area of the foot from injury, such are widely used in various sectors of the footwear industry. Typically, these protection devices are referred to as metatarsal guards, and may be employed as an external guard or integrated into the shoe itself (*e.g*., an internal guard). Common scenarios in which such metatarsal guards may be necessary are in construction applications, in mining, or in other like fields where the foot may be susceptible to injury due to impact with extraneous objects (*e.g*., falling rocks, lumber, puncture via nails, etc.) In some cases, while the aforementioned metatarsal guard(s) may provide adequate protection from injury, such guard(s) may restrict comfortable movement of the foot due to the rigidity of the guard(s). Other deficiencies not noted here also exist.

Beyond protection of the metatarsal area of the foot, other sensitive areas that are susceptible to injury may also require shielding. For example, it may be the case that the foot, in certain scenarios, requires side or heel protection instead of, or in combination with, metatarsal protection. It is not uncommon to provide such protective devices on the side or heel region of a shoe in order to provide shielding. Even these protective mechanisms, however, may suffer from several defects, and therefore lack of comfort in use. For example, some heel (or other) protective devices are unnecessarily rigid, and thereby do not adequately absorb the shock resulting from an impact or other injuring event. Stated differently, since such protective devices are unduly rigid, force generated from an impact can travel through the device and be translated to the user, resulting in injury to the user from the impact. Such rigidity also decreases comfort, and sometimes results in the protective device being overly heavy. This may also be the case for several of the metatarsal protection devices noted above.

### BRIEF SUMMARY OF THE INVENTION

According to one embodiment of the first invention, such includes a cushioning support system for use in an article of footwear. The cushioning support system may have a series of components comprising: (1) a cushioning layer having a top surface and a bottom surface, wherein a pattern of tapered recesses is formed into at least one of the top and bottom surfaces; (2) a welt-frame assembly attached to the bottom surface of the cushioning layer, the welt-frame assembly having a rear part and a separate forepart; and (3) a flexible ply rib attached to a periphery of the cushioning support system for securing to a welt. The cushioning support system may also include toe, heel, and arch regions and a longitudinal and lateral axis, the longitudinal axis extending from the toe region to the heel region and the lateral axis extending transverse to the longitudinal axis.

In further aspects of this embodiment, the pattern of tapered recesses includes frustum-shaped recesses formed into the at least one of the top and bottom surfaces of the cushioning layer, the pattern having a first frustum-shaped recess with a first depth and width and a second frustum-shaped recess with a second depth and width, each depth and width being different. Still further, the frustum-shaped recesses may include a first series of alternating first and second frustum-shaped recesses extending along the lateral axis of the support system, and a second series of alternating first and second frustum-shaped recesses extending along the longitudinal axis of the support system. It is also the case that the first frustum-shaped recess may extend into the top surface of the cushioning layer and the second frustum-shaped recess may extend into the bottom surface of the cushioning layer, the second frustum-shaped recess being inverted with respect to the first frustum-shaped recess.

In other aspects of the aforementioned embodiment, the frustum-shaped recesses may be frustoconical or hexagonal in shape.

Another embodiment of the first invention may include a shoe having a cushioning support system as previously described with respect to the above embodiment. Thus, the shoe may include a cushioning support system having any of the features of the cushioning support system described with respect to the foregoing embodiment. Additionally, the shoe may include a welt for securing an upper of the shoe to the flexible ply rib, and, thus, the cushioning support system. Other aspects of this second embodiment may include: (1) an insole, which is connected to the top surface of the cushioning layer; (2) a midsole, which is attached to the bottom surface of the cushioning layer; and (3) an outsole connected to the midsole. user's foot, such that the device is configured to provide protection for the metatarsal region against injurious events.

### BRIEF DESCRIPTION OF THE DRAWINGS

A more complete appreciation of the subject matter of the present invention and of the various advantages thereof can be realized by reference to the following detailed description in which reference is made to the accompanying drawings in which:
Fig. 1 is a cutaway view of a shoe utilizing a prior art welt construction.
Fig. 2A is an exploded bottom view of a cushioning support system in accordance with one embodiment of the present invention.
Figs. 2B-G are various bottom views of the individual components of the cushioning support system of Fig. 2A.
Fig. 3 is a top view of the cushioning support system of Fig. 2A.
Fig. 4A is a cutaway view of the cushioning support system of Fig. 2A taken along line A-A of Fig. 3.
Figs. 4B-C are various cutaway views of several components of the cushioning support system of Fig. 4A.
Fig. 5A is an exploded cross-sectional view of a heel portion of the cushioning support system of Fig. 2A taken along line D-D of Fig. 3.
Figs. 5B-E are various cross-sectional views of the individual components of the cushioning support system of Fig. 5A.
Fig. 6A is an exploded cross-sectional view of a forefoot portion of the cushioning support system of Fig. 2A taken along line B-B of Fig. 3.
Figs. 6B-C are various cross-sectional views of several components of the cushioning support system of Fig. 6A.
Fig. 7 is a cutaway view of a particular shoe construction including the cushioning support system of Figs. 2-6C.
Fig. 8 illustrates one embodiment of the manufacturing process used to create the cushioning support system of Figs. 2-6C.
Fig. 9A is a top view of a cushioning support system in accordance with an alternate embodiment of the present invention.
Fig. 9B is a cross-sectional view of an arch region of the cushioning support system of Fig. 9A.
Fig. 10 is a side view of a shoe incorporating therein an internal metatarsal guard not according to the invention.
Figs. 11A-I include top, bottom, medial, lateral, and section views of an internal metatarsal guard not according to the invention, with Fig. 11J showing the pattern of cones formed on the internal guard of Figs. 11A-I.
Figs. 12A-I include top, bottom, medial, lateral, and section views of a protective layer usable with various embodiments not according to the invention, with Fig. 12J showing the pattern of hexagons formed on the protective layer of Figs. 12A-I.
Figs. 13A-I include top, bottom, medial, lateral, and section views of an alternate internal metatarsal guard not according to the invention.
Fig. 14 is a side view of a shoe incorporating therein an external metatarsal guard not according to the invention.
Figs. 15A-I include top, bottom, and section views of a rigid layer forming part of the external metatarsal guard employed in the shoe of Fig. 14.
Figs. 16A-H include top, bottom, medial, lateral, and section views of one portion of an external metatarsal guard not according to the invention.
Figs. 17A-H include top, bottom, medial, lateral, and section views of one portion of an alternate external metatarsal guard not according to the invention.

### DETAILED DESCRIPTION

In describing the preferred embodiments of the subject illustrated and to be described with respect to the drawings, specific terminology will be used for the sake of clarity. However, the invention is not intended to be limited to any specific terms used herein, and it is to be understood that each specific term includes all technical equivalents, which operate in a similar manner to accomplish a similar purpose.

### I. The Anti-Fatigue Welt-Frame

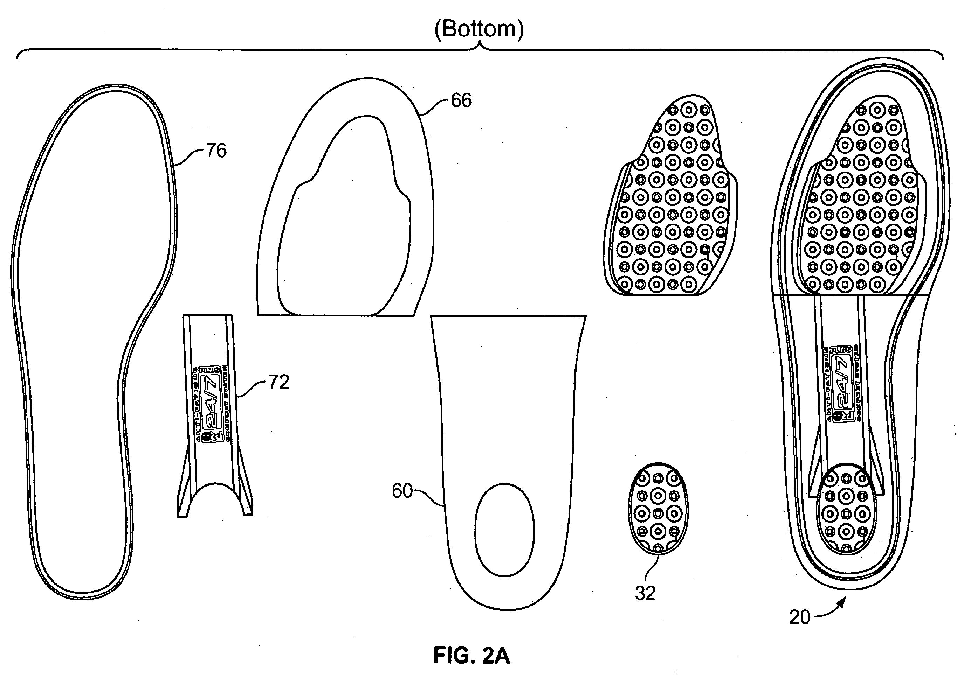

Referring to Fig. 2A, a cushioning support system 20, which may be used as a welt-frame assembly for a shoe, includes several components, among which may be: (1) an inverted cone anti-fatigue layer 32 for providing cushioning and energy return; (2) a rigid shock diffusion welt-frame back part 60; (3) a flexible forepart welt-frame 66; (4) a torsional shank 72; and (5) a flexible ply rib 76, which may surround a periphery 26 of the support system 20. As described below, such components may cooperate to provide improved cushioning and support in a welted shoe, rendering the shoe more comfortable for an average user. The overall construction of the support system 20 may also result in a streamlined manufacturing process, which ultimately may reduce the costs associated therewith.

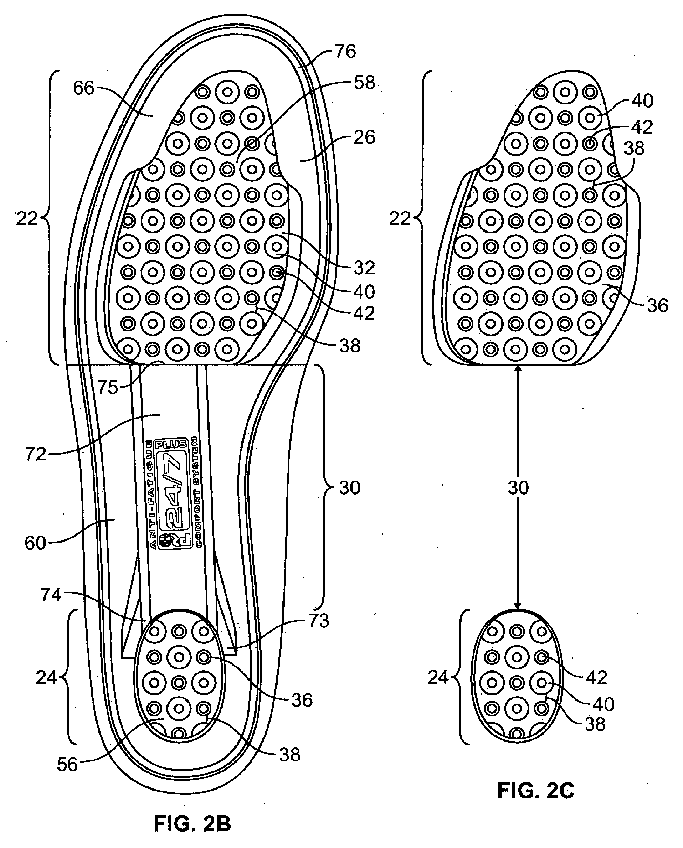

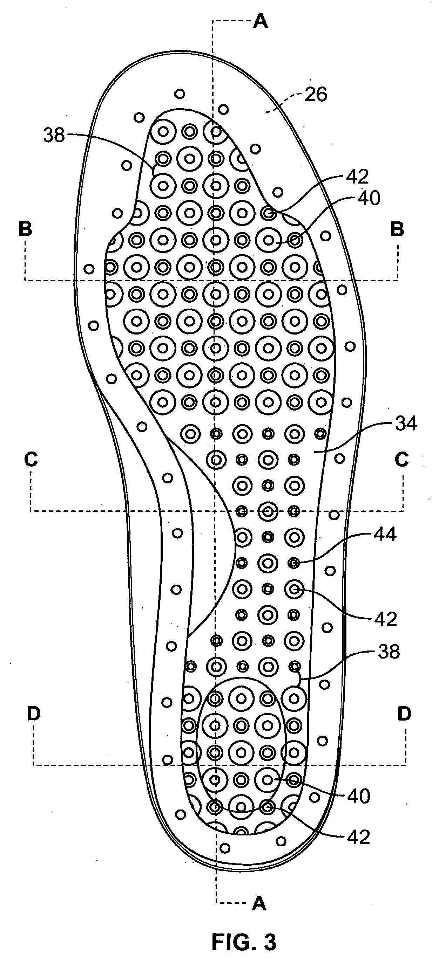

Referring now to Figs. 2B and 3, cushioning support system 20, in one embodiment, may have a toe region 22, a heel region 24, an arch region 30, and a periphery 26. Extending from toe region 22, through arch region 30, and into heel region 24 of support system 20 may be an inverted cone anti-fatigue layer 32, which provides support system 20 with improved cushioning and energy return characteristics. The anti-fatigue layer 32 included with cushioning support system 20 may also have a top surface 34 (Fig. 3) and a bottom surface 36 (Fig. 2B), both of which may have a pattern of resilient cones 38 formed thereon.

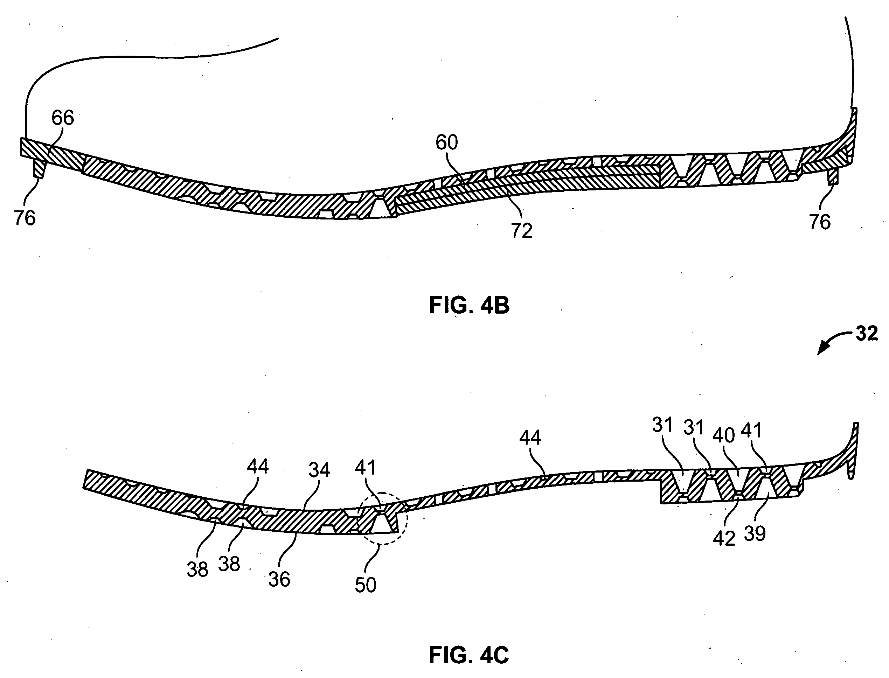

More specifically, as illustrated by the cutaway view of anti-fatigue layer 32 in Fig. 4C, individual cones 31 in a particular pattern of cones 38 may extend into either top or bottom surfaces 34, 36 of anti-fatigue layer 32. Such cones 31 may also have a generally frustoconical shape 39 terminating in a circular region 41. By extending inward into top and bottom surfaces 34, 36, respectively, these individual cones 31 may also be arranged in an opposing or inverted relationship with respect to one another. In other words, a particular cone 31 may extend into top surface 34 of anti-fatigue layer 32, and an opposing cone 31 may extend into bottom surface 36 of anti-fatigue layer 32, such that the cone 31 in bottom surface 36 may be inverted with respect to the cone 31 in top surface 34. Thus, in one embodiment of cushioning support system 20, a pattern of cones 38 formed into bottom surface 36 of anti-fatigue layer 32 may be arranged in an inverted relationship with respect to a pattern of cones 38 formed into top surface 34.

Referring still to Fig. 4C, individual cones 31 may, in one embodiment, also be arranged into various other patterns 38 on the top and bottom surfaces 34, 36 of anti-fatigue layer 32. Top and bottom surfaces 34, 36 of anti-fatigue layer 32 may, in fact, include individual cones 31 of differing depths and/or widths for creating such patterns 38. As an example, top and/or bottom surfaces 34, 36 of anti-fatigue layer 32 may include: (1) large cones 40, *e.g*., cones which, relative to other cones in a particular pattern of cones 38, have an increased or maximum depth and width; (2) medium cones 42, *e.g.*, cones which, relative to other cones in a particular pattern of cones 38, have a medium depth and width; and (3) small cones 44, *e.g*., cones which, relative to other cones in a particular pattern of cones 38, have a decreased or minimum depth and width. In a particular embodiment, these large 40, medium 42, and small 44 cones may be arranged in different patterns 38 on either top or bottom surface 34, 36 of anti-fatigue layer 32 so as to provide different cushioning characteristics in different regions of support system 20 (*e.g*., toe region 22, heel region 24, and arch region 30).

As an example, a pattern of cones 38, as shown in Fig. 4C, may be arranged on both top and bottom surfaces 34, 36 of anti-fatigue layer 32, such that corresponding large 40 and medium 42 cones are both: (1) inverted with respect to one another; and (2) are arranged such that the circular region 41 of one cone is adjacent to the circular region 41 of another cone. More particularly, in one embodiment, a large cone 40 may be formed into bottom surface 36 of anti-fatigue layer 32, while a medium cone 42 may be formed into top surface 34 of anti-fatigue layer 32, thus placing medium cone 42 in an inverted relationship with respect to large cone 40. Further, the circular region of the large cone 40 may be arranged adjacent the circular region 41 of the medium cone 42, such that both circular regions 41 touch one another. For illustrative purposes, such opposing large 40 and medium 42 cones are shown at reference numeral 50 in Fig. 4C.

Referring now to Fig. 2B, in a particular embodiment, opposing large 40 and medium 42 cones as described above may be formed in heel 24 and toe 22 regions of support system 20, although other positions are also contemplated. Likewise, other patterns of cones are also contemplated, including a large cone 40 being inverted with respect to a small cone 44, and/or a medium cone 42 being inverted with respect to a small cone 44, and so on. As a result, in one embodiment, a particular pattern of cones 38 may be arranged on support system 20, such that large 40, medium 42, and/or small 44 cones are: (1) inverted with respect to one another; and (2) have circular regions 41, which are arranged adjacent one another, as described above.

As shown in both Fig. 2C and Fig. 3, still other patterns of cones 38 may be used with support system 20. As one example, toe region 22 of support system 20 may include a pattern of cones 38 in which large 40 and medium 42 cones alternate with one another both laterally and longitudinally along support system 20. Stated differently, in a direction extending along line A-A in Fig. 3 (*e.g*., longitudinally along support system 20), a pattern of cones 38 may be formed in top and/or bottom surfaces 34, 36 of anti-fatigue layer 32, such that large 40 and medium 42 cones alternate with one another.

Similarly, in a direction extending along line B-B of Fig. 3 (*e.g.,* laterally along support system 20), a pattern of cones 38 may be formed in top and/or bottom surfaces 34, 36 of anti-fatigue layer 32, such that large 40 and medium 42 cones also alternate with one another. Consequently, in toe region 22 of support system 20 (Fig. 2C), the pattern of cones 38 may be arranged such that substantially all large cones 40 are surrounded by adjacent medium cones 42. Likewise, substantially all medium cones 42 may be surrounded by adjacent large cones 40. Accordingly, within toe region 22 of support system 20, top and/or bottom surfaces 34, 36 of anti-fatigue layer 32 may include a pattern of cones 38 in which large cones 40 alternate with medium cones 42 both longitudinally and laterally along support system 20, so as to form the aforementioned pattern 38.

A similar pattern of cones 38 may also be formed in the heel region 24 of support system 20 on both top surface 34 (Fig. 3) and bottom surface 36 (Fig. 2C), of anti-fatigue layer 32. Thus, the pattern of cones 38 formed on top and/or bottom surfaces 34, 36 of anti-fatigue layer 32 may, nearing heel region 24 of support system 20, mirror or closely match the pattern of cones 38 formed in top and/or bottom surfaces 34, 36 of anti-fatigue layer 32, nearing toe region 22 of support system 20. For instance, a series of alternating large 40 and medium 42 cones may be arranged both longitudinally and laterally along support system 20, thus forming a pattern of cones 38 in the heel region 24 of support system 20, which is similar to the pattern of cones 38 formed in toe region 22 of support system 20.

Referring still to Fig. 2C and Fig. 3, arch region 30 of support system 20 may include a pattern of cones 38, which is slightly modified from the previous patterns described with respect to toe region 22 and heel region 24. Specifically, in a particular embodiment, arch region 30 may include a series of alternating medium 42 and small 44 cones formed into top surface 34 of anti-fatigue layer 32 (Fig. 3), which extend both longitudinally and laterally along support system 20. In other words, in a direction extending along line A-A of Fig. 3 (*e.g*., longitudinally along support system 20), a pattern of cones 38 may be formed in top surface 34, such that medium 42 and small 44 cones alternate with one another. Similarly, in a direction extending along line B-B of Fig. 3 (*e.g*., laterally along support system 20), a pattern of cones 38 may be formed in top surface 34, such that medium 42 and small 44 cones also alternate with one another. Consequently, in arch region 30 of support system 20, the pattern of cones 38 may be arranged such that substantially all medium cones 42 are surrounded by adjacent small cones 44. Likewise, substantially all small cones 44 may be surrounded by adjacent medium cones 42. Thus, top surface 34 of anti-fatigue layer 32 may, nearing arch region 30 of support system 20, contain a pattern of cones 38 in which a series of medium 42 and small 44 cones alternate with one another both longitudinally and laterally along support system 20.

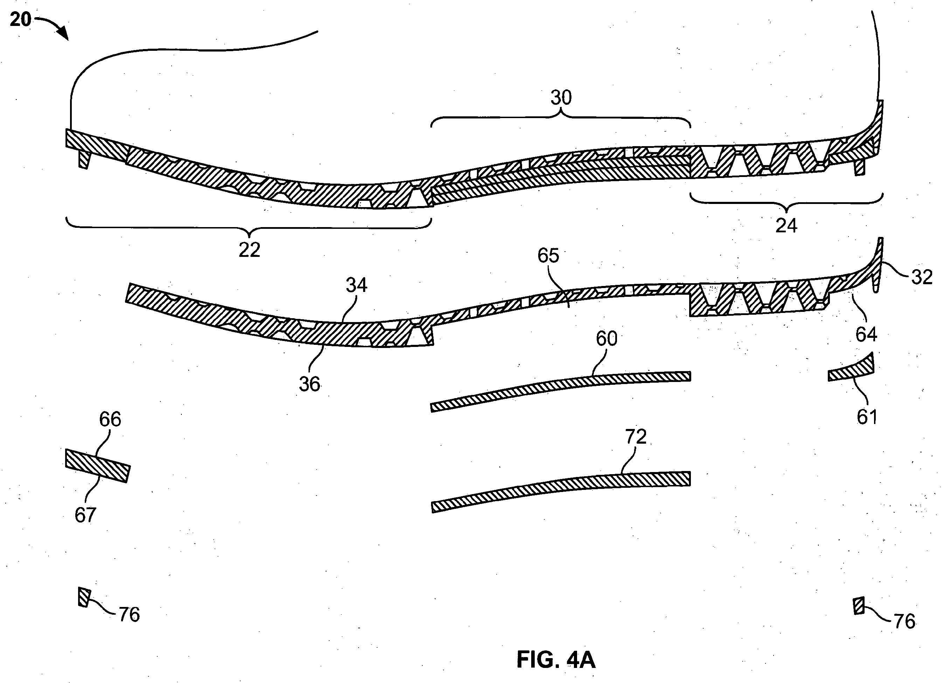

Referring now to Figs. 2B and 4A, support system 20 may also include a rigid shock diffusion welt-frame back part 60, which may overly bottom surface 36 of anti-fatigue layer 32 (Fig. 4A). In particular, welt-frame back part 60 may rest within respective channels 64, 65 formed in the bottom surface 36 of anti-fatigue layer 32. Moreover, such channels 64, 65 may, in one embodiment, be formed within heel 24 and arch 30 regions of support system 20 (Fig. 2B). In a particular embodiment, channel 65 may be formed within arch region 30 of support system 20 and may have a generally rectangular shape. In yet another embodiment, channel 64 may be formed within heel region 24 of support system 20 and may extend about a heel patch 56 of anti-fatigue layer 32, thus forming a generally oval channel 64.

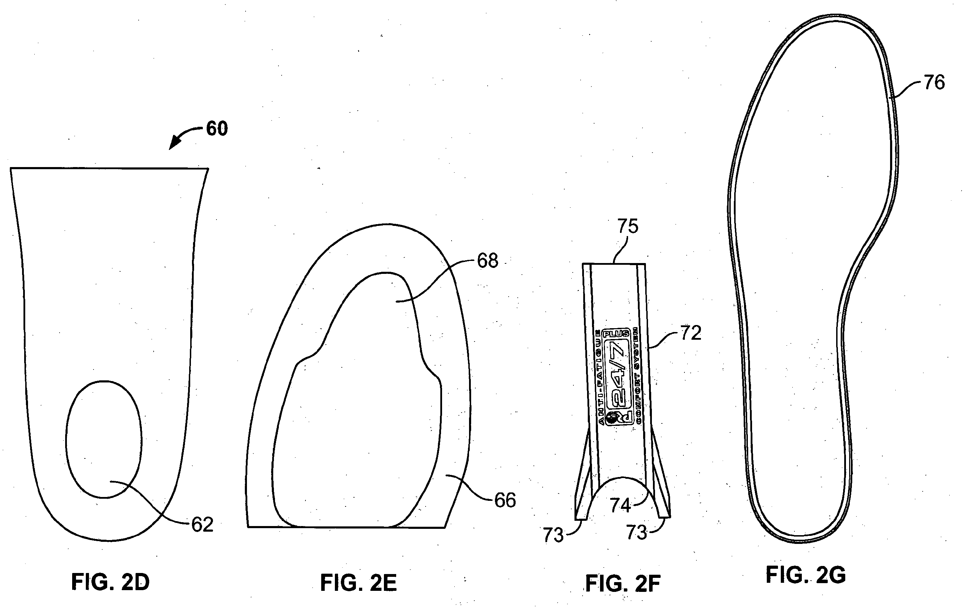

As shown in Fig. 2D, welt-frame back part 60 may also include an opening 62, which, in one embodiment, may accommodate the heel patch 56 of anti-fatigue layer 32. Even further, opening 62 may be oval, so as to mirror the oval shape of heel patch 56. Thus, it is contemplated that welt-frame back part 60 may overly bottom surface 36 of anti-fatigue layer 32, such that opening 62 is situated about heel patch 56, and the remainder of welt-frame back part 60 is accommodated within respective channels 64, 65 (Fig. 4A).

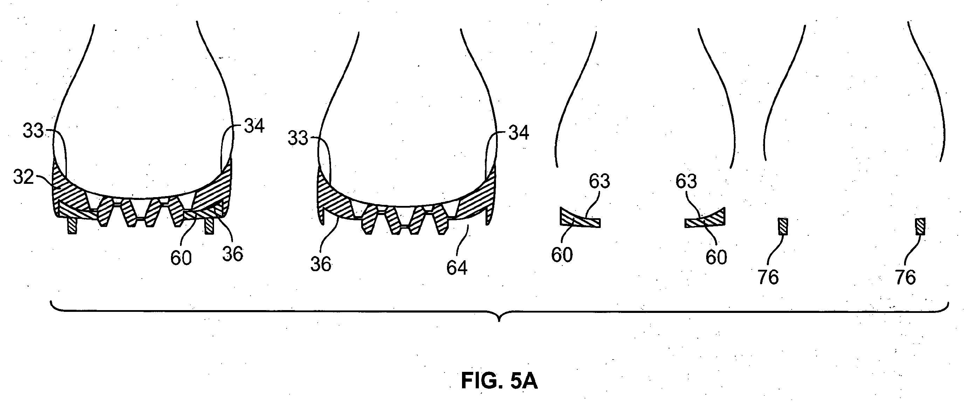

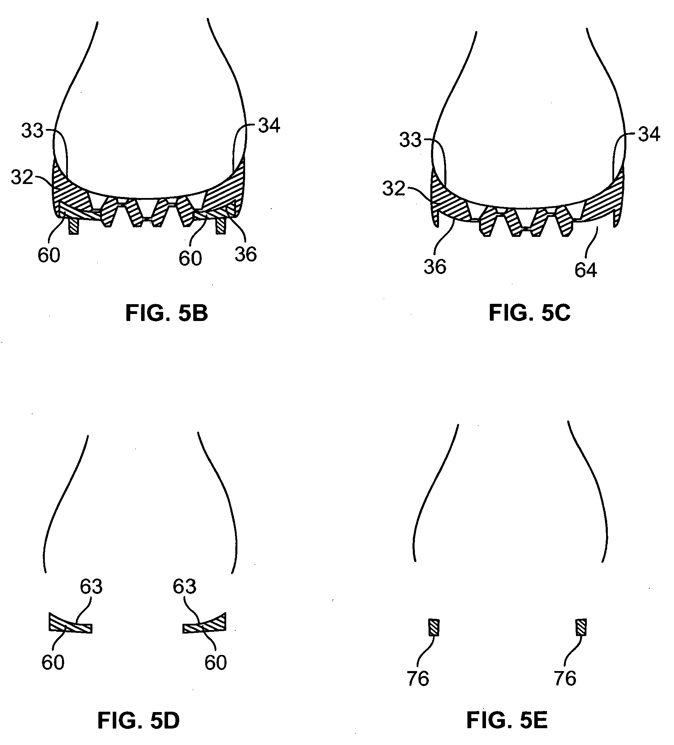

Referring now to Figs. 5A-E, welt-frame back part 60 may also be slightly curved so as to complement a curvature 33 formed in anti-fatigue layer 32. Specifically, anti-fatigue layer 32 may, in one embodiment, have a curvature 33, which accommodates the natural shape of the heel and arch regions of the human foot. Such curvature 33 may, in fact, serve to restrict deformation of the foot upon contact with the top surface 34 of the anti-fatigue layer 32. In this way the curvature 33 of anti-fatigue layer 32 may prevent a local "sore spot" from resulting. In other words, upon contact with top surface 34 of anti-fatigue layer 32, a user's foot may be surrounded by the curvature 33 of anti-fatigue layer 32, such that the user's foot may be compressed inwardly. The natural padding of the human foot is thusly retained, which is in contrast to other non-curved structures. Specifically, upon contact with a flat surface, the human foot may deform and spread out over a larger area than is otherwise the case. The natural padding of the foot may therefore be lost, resulting in a less cushioning potential. To counteract this effect, anti-fatigue layer 32 may have a curvature 33, as described, and welt-frame back part 60 may also have a curvature 63, which cooperates with the curvature 33 of anti-fatigue layer 32. In a particular embodiment, channel 64 in bottom surface 36 of anti-fatigue layer 32 may be curved, such that the curvature 63 of welt-frame back part 60 fits flush within such channel 64. Improved cushioning is thusly created in the heel 24 and arch 30 regions of support system 20 via the curvature 33 of anti-fatigue layer 32 and the curvature 63 of welt-frame back part 60.

Cushioning support system 20 may also utilize a rigid shock diffusion welt-frame back part 60, which is similar in construction to the shock diffusion mechanism disclosed in U.S. Patent No. 6,205,683. Thus, like the shock diffusion mechanism of the '683 Patent, welt-frame back part 60 may vary in rigidity so as to accommodate different end uses (*e.g.,* enthusiast hiking, recreational hiking, multipurpose, etc.) Even further, welt-frame back part 60 may, due to its rigidity, serve as a support when a user stands in a strained position (*e.g*., while standing on a ladder rung), and/or may act to spread out or disperse ground forces upon heel contact. Thus, welt-frame back part 60 may increase the stability of cushioning support system 20.

Additionally, many of the materials utilized to construct the shock diffusion mechanism of the '683 Patent may also be suitable for welt-frame back part 60, such materials including, but not being limited to, glass-filled nylon, composites, nylon, polypropylene, urethane, engineered thermal plastics, and the like.

Referring now to Figs. 2A and 2B, cushioning support system 20 may also include a flexible forepart welt-frame 66, which may be co-molded, or joined in some other manner (*e.g*., through an adhesive or stitching), to rigid shock diffusion welt-frame back part 60. Yet, in contrast to welt-frame back part 60, which may be located in heel region 24 of support system 20, flexible forepart welt-frame 66 may be located in the toe region 22 of support system 20 (Fig. 2B). More specifically, forepart welt-frame 66 may be formed about a toe patch 58 of anti-fatigue layer 32, such that forepart welt-frame 66 surrounds toe patch 58. Accordingly, in a particular embodiment, forepart welt-frame 66 may provide a protective toe support structure for use in safety footwear applications.

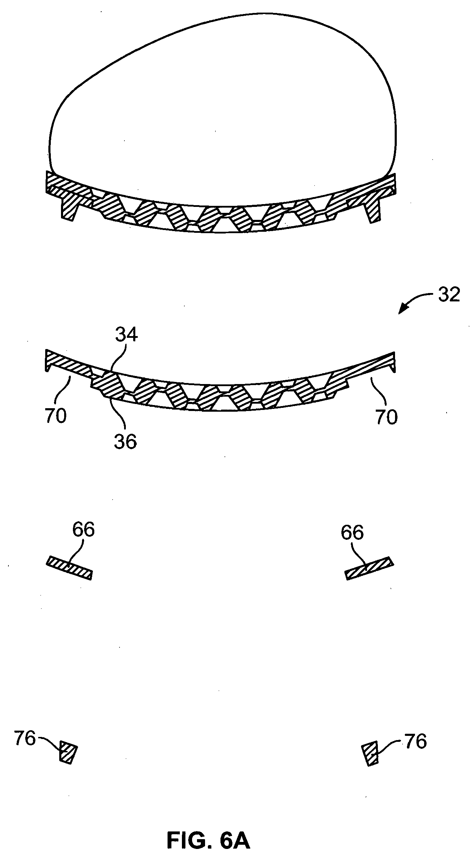

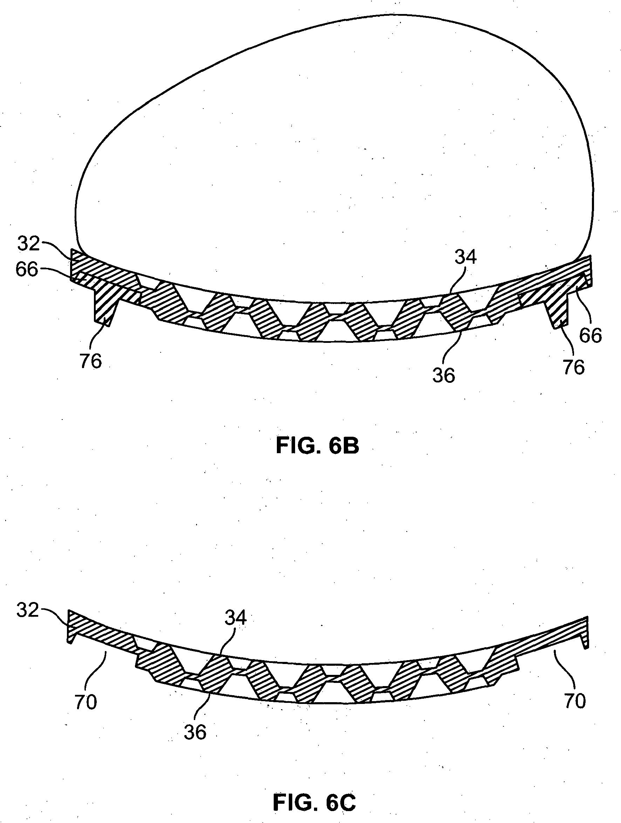

Referring to Figs. 2E and 6A-C, in a particular embodiment, an opening 68 may also be provided in flexible forepart welt-frame 66 (Fig. 2E), such that forepart welt-frame 66 may be received into a channel 70 formed in bottom surface 36 of anti-fatigue layer 32 (Fig. 6A). As such, in one embodiment, channel 70 may surround toe patch 58 so as to create an oval-type channel 70 for accommodating forepart welt-frame 66. Thus, like welt-frame back part 60, flexible forepart welt-frame 66 may also overly the bottom surface 36 of anti-fatigue layer 32.

Flexible forepart welt-frame 66 may also be composed of a flexible plastic material, which, relative to rigid shock diffusion welt-frame back part 60, provides increased compliance in the toe region 22 of support system 20. Such flexibility may allow for proper function of the foot in the propelling and push-off stage of motion, and may further provide sure footedness for a user of support system 20 (*e.g*., the relative flexibility of forepart welt-frame 66 may allow a user to have an improved feel for the ground). Suitable materials for use with flexible forepart welt-frame 66 may include, but are not limited to, thermoplastic urethanes, engineered thermal plastics, and nylon.

Referring now to Figs. 2B and 4A, a torsional shank 72 may also be included with cushioning support system 20 for providing stability to the arch 30 and heel 24 regions of support system 20. In a particular embodiment, torsional shank 72 may overly welt-frame back part 60 within arch region 30 of support system 20 (Fig. 2B). Specifically, similar to welt-frame back part 60, torsional shank 72 may be received within channel 65 in bottom surface 36 of anti-fatigue layer 32 (Fig. 4A). Thus, both torsional shank 72 and welt-frame back part 60 may occupy channel 65, which may be formed in anti-fatigue layer 32 within arch region 30 of support system 20.

As shown in Figs. 2B and 2F, torsional shank 72 may also, in one embodiment, be generally Y-shaped (Fig. 2F), with one end of the shank 72 having a curvature 74 for abutting against a portion of heel patch 56 (Fig. 2B), and an opposing end having a squared-off section 75 for abutting against a portion of toe patch 58. Consequently, torsional shank 72 may overly arch region 30 of support system 20 from toe patch 58 to heel patch 56 of anti-fatigue layer 32 (Fig. 2B). Further, in one embodiment, due to the Y-shape of torsional shank 72, a series of legs 73 may be formed at one end of the shank 72 for surrounding heel patch 56. This general Y-shape of shank 72 may also provide for increased torsional stability, with shank 72 resisting twisting as a result of the legs 73 projecting from the curvature 74 end of shank 72. Thus, the shank 72 may offer increased stability in the arch 30 and heel 24 regions of cushioning support system 20.

Referring to Figs. 2B, 2G, and 4A, cushioning support system 20 may also include a flexible ply rib 76 (Fig. 2G) that traverses a periphery 26 of support system 20 (Fig. 2B). In a particular embodiment, flexible ply rib 76 may extend from a bottom surface 67 of flexible forepart welt-frame 66, and from a bottom surface 61 of rigid shock diffusion welt-frame back part 60 (Fig. 4A). As a result, flexible ply rib 76 may form a flange, which extends about the periphery 26 of support system 20. In one embodiment, flexible ply rib 76 may extend completely around the periphery 26 of support system 20; although it is equally contemplated that flexible ply rib 76 may extend only partially around the periphery 26 of support system 20.

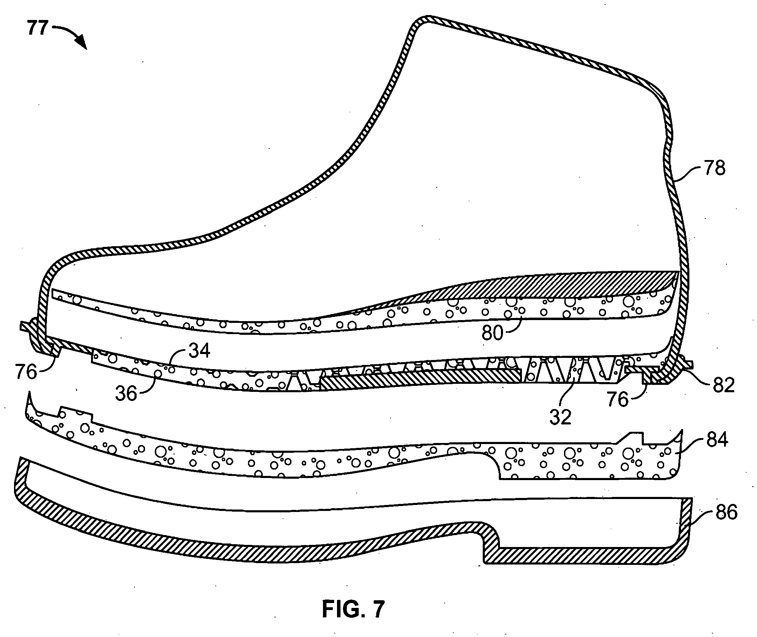

Referring now to Fig. 7, flexible ply rib 76 may be composed of a flexible plastic, such as thermoplastic urethane, ethylene-vinyl acetate (EVA), or engineered thermal plastic, and may provide an anchoring structure for securing a welt 82 to cushioning support system 20. Through the use of such welt 82, an upper 78 of a shoe may be secured to support system 20 so as to form a welted shoe 77. In a particular embodiment, a series of threads (not shown) may be threaded into the upper 78, through the welt 82, and into the flexible ply rib 76 so as to secure the upper 78 to cushioning support system 20. An insole 80 may then be placed over top surface 34 of anti-fatigue layer 32, a midsole 84 over bottom surface 36 of anti-fatigue layer 32, and, finally, an outsole 86 over the midsole 84 so as to form a welted shoe 77.

Construction of the aforementioned welted shoe 77 may also involve a number of different steps, as described below. As an initial step, a cushioning support system 20 including several of the aforementioned components may be provided, such components including, *inter alia*: (1) an inverted cone anti-fatigue layer 32 for providing cushioning;

(2) a rigid shock diffusion welt-frame back part 60; (3) a flexible forepart welt-frame 66; (4) a torsional shank 72; and (5) a flexible ply rib 76, which may surround a periphery 26 of the support system 20. Upon manufacture of support system 20, in the manner described below or otherwise, an upper 78 may be provisionally secured to the flexible ply rib 76 via a staple or other securing mechanism (*e.g.,* an adhesive). A welt 82 may then be placed over the provisionally secured upper 78, such that the welt 82 overlies the upper 78 and flexible ply rib 76. A series of threads (not shown) may then be threaded through the welt 82, into the upper 78, and through the flexible ply rib 76. The threads may then be tightened so as to firmly secure the upper 78 to the cushioning support system 20.

Subsequently, a midsole 84 may be secured to a bottom surface 36 of the inverted cone anti-fatigue layer 32 via an adhesive or other similar means. Combined with anti-fatigue layer 32, the midsole 84 may provide improved cushioning in the welted shoe 77. Similarly, an outsole 86 may be secured over the midsole 84 via an adhesive, or other similar means, thus providing a durable surface with which to contact the ground (*e.g*., a rubber or synthetic surface). Lastly, an insole 80 may be included with the welted shoe 77, so as to provide even more comfort for a user of the shoe 77. Such steps as described can be performed in the particular order above; although it is equally contemplated that the order of steps may be modified according to industry standards.

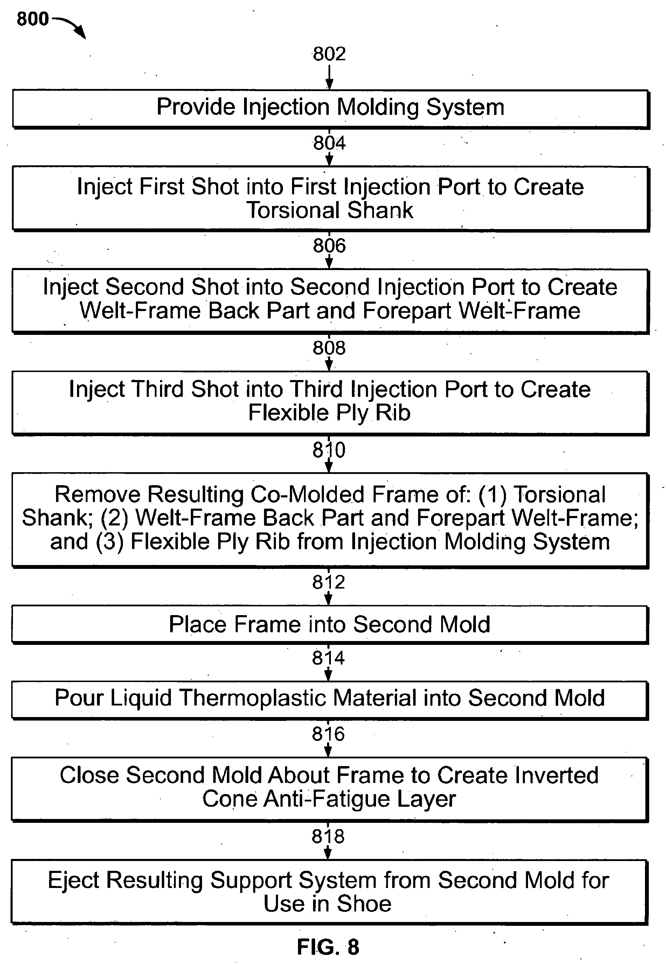

Referring now to Fig. 8, manufacturing the aforementioned cushioning support system 20 may also include a number of steps 800, which may streamline efficiency and/or costs related to the production of a welted shoe 77. As a first step 802, an injection molding system may be provided, in which several portions of cushioning support system 20 may be molded. In a particular embodiment, the manufacturing process may begin with injection molding a torsional shank 72

(Fig. 2F), as shown in step 804. Specifically, a particular amount or "shot" of material may be heated so as to attain liquid characteristics. The "shot" of material may then be inserted into the injection molding system via an injection port, or other equivalent means. Upon entry into the injection molding system through the injection port, the first "shot" may interact with the molding system and be formed into the shape of a torsional shank 72, as hereinbefore described. Stated differently, upon injection of the first shot through its corresponding injection port, the first shot of material may be situated in a mold having the configuration of torsional shank 72 (*e.g*., a Y-shaped mold). Upon cooling, the first shot may then solidify into the shape of shank 72.

Subsequently, a second shot of material may be provided for injection through a second injection port, so as to form rigid shock diffusion welt-frame back part 60 and flexible forepart welt-frame 66 (Figs. 2D & E), as illustrated by step 806 of Fig. 8. Notably, both such components (*e.g*., welt-frame back part 60 and forepart welt-frame 66) may be molded together using one "shot." Thus, welt-frame back part 60 and forepart welt-frame 66 may be a single co-molded unit. Further, welt-frame back part 60 may be more rigid than forepart welt-frame 66, as previously described.

Upon injection of the second shot into the second injection port, rigid shock diffusion welt-frame back part 60 and flexible forepart welt-frame 66 may be molded over torsional shank 72 (Fig. 2A). Additionally, welt-frame back part 60 and forepart welt-frame 66 may be placed in a portion of the injection molding system, which corresponds to the shape of such components as hereinbefore described. Thus, as an example, welt-frame back part 60 and forepart welt-frame 66 may be placed in a mold, which is configured to create openings 62, 68 for receiving a heel 56 and toe 58 patch of anti-fatigue layer 32 (Fig. 2B).

As shown in step 808 of Fig. 8, a third shot of material may then be inserted through a third injection port so as to form flexible ply rib 76 (Fig. 2G). In a particular embodiment, the third shot of material may be inserted through the third injection port so as to form a ply rib 76, which overlies the already formed rigid shock diffusion welt-frame back part 60 and the flexible forepart welt-frame 66 (Fig. 2A). Additionally, as with the other molded components, flexible ply rib 76 may be molded into a shape corresponding to the shape of ply rib 76 as hereinbefore described. A flexible ply rib 76 forming a flange may therefore be formed on welt-frame back part 60 and flexible forepart welt-frame 66.

As shown in steps 810 and 812 of Fig. 8, after formation of the aforementioned components in the injection molding system, the resulting "frame" may be transferred into another mold within which an inverted cone anti-fatigue layer 32 may be formed. In a particular embodiment, this second molding system may be similar in shape to a waffle iron-type structure. Thus, the second molding system may be an open mold having a series of cone-shaped protruding structures for forming a pattern of cones 38 in anti-fatigue layer 32, as hereinbefore described.

Upon securing the aforementioned "frame" within this second molding structure (*e.g*., through the use of pins or otherwise), liquid material, typically in the form of a urethane based foam, may be poured over the "frame," as illustrated by step 814 of Fig. 8. The second molding system may then be closed about cushioning support system 20, as shown in step 816, so as to form an inverted cone anti-fatigue layer 32 having a pattern of cones 38. As previously described, this process permits a pattern of cones 38 to be formed in top and bottom surfaces 34, 36 of the anti-fatigue layer 32, as opposed to just bottom surface 36. Stated differently, since the second molding system may clamp about a "frame" comprised of already molded: (1) torsional shank 72; (2) rigid shock diffusion welt-frame back part 60 and flexible forepart welt-frame 66; and (3) flexible ply rib 76, a pattern of cones 38 may be formed into both the top and bottom surfaces 34, 36 of anti-fatigue layer 32. As a final step, 818, the resulting cushioning support system 20 may be ejected from the second mold for use in a shoe.

As alluded to previously, the manufacturing process described above may result in a support system 20 having the aforementioned pattern of cones 38, which is not found in previous welt constructions utilizing a cushioning layer with a cone-type geometry. Rather, with those systems, a pattern of cones may only be formed in a bottom surface of the cushioning layer due to manufacturing constraints resulting from the use of a stiff insole board. More specifically, in previous welt-constructions the insole board typically must be secured to a relatively flat portion of the cushioning layer. Accordingly, with these welt-constructions, the top surface of the cushioning layer is flat so as to allow for attachment to an insole board. A pattern of cones is therefore not formed in a top surface of the cushioning layer, thus resulting in a loss of cushioning potential. As such, a molding system that clamps about the cushioning layer to form a pattern of cones 38 as hereinbefore described is not feasible.

What's more, since a stiff insole board typically overlies the cushioning layer, a user's foot is separated from the cushioning layer by a stiff component (*e.g*., the insole board), which reduces cushioning potential and hardens the welted shoe. Moreover, a welt construction with such added components (e.g., a stiff insole board, etc.) typically increases the complexity of manufacturing. Put simply, an injection molding process of the type described above cannot be used with such welt constructions. Thus, the manufacture of cushioning support system 20 as described is improved over past systems. Likewise, the resulting product (e.g., cushioning support system 20) provides improved cushioning characteristics not enjoyed by previous welt constructions.

In the devices depicted in the figures, particular structures are shown that are adapted to provide improved cushioning for a welted shoe. One aspect of the invention also contemplates the use of any alternative structures for such purposes, including structures having different lengths, shapes, and configurations. For example, while the geometry of individual cones 31 has been described as being conical, other shapes are also contemplated, including a tapered hexagonal prism, a tapered square prism, a cube, or other like shapes. As another example, while individual cones 31 have been described as being formed in both top and bottom surfaces 34, 36 of anti-fatigue layer 32, it is equally contemplated that individual cones 31 in a pattern of cones 38 may be formed only on one such surface (*e.g*., top 34 or bottom 36 surface). Thus, any one of the previously described patterns of cones 38 may be formed in either top 34 or bottom 36 surface of anti-fatigue layer 32, instead of both such surfaces.

Even further, although toe 22 and heel 24 regions of the cushioning support system 20 have been described as including only large 40 and medium 42 cones, it is equally contemplated that such regions may include large 40, medium 42, and small 44 cones. For instance, while heel 24 and toe 22 regions of support system 20 have been described as having an alternating series of large 40 and medium 42 cones, such regions may also have a series of alternating large 40, medium 42, and/or small 44 cones. Thus, in one embodiment, a pattern of cones 38 may be formed into toe 22 and heel 24 regions of support system 20, in which medium 42 and small 44 cones alternate with one another both laterally and longitudinally along support system 20.

Likewise, while arch region 30 has been described as including only medium 42 and small 44 cones, it is equally contemplated that such region may include large 40, medium 42, and/or small 44 cones. Thus, similar to toe 22 and heel 24 regions, arch region 30 may include a series of alternating large 40, medium 42, and/or small 44 cones. As a particular example, a pattern of cones 38 may be formed into arch region 30 of support system 20, in which large 40 and small 44 cones alternate with one another both laterally and longitudinally along support system 20. Accordingly, it is contemplated that an alternating series of cones as described above may be combined in any number of fashions to create anti-fatigue layer 32.

Additionally, while the opening 62 in welt-frame back part 60 has been described as completely surrounding heel patch 56 of anti-fatigue layer 32, opening 62 may only partially surround heel patch 56. Likewise, while the opening 68 in flexible forepart welt-frame 66 has been described as completely surrounding toe patch 58 of anti-fatigue layer 32, opening 68 may only partially surround toe patch 58. Even further, although opening 62 in welt-frame back part 60 has been described as being oval in shape, other shapes for opening 62 are also contemplated, including circular, hexagonal, square, or the like.

Furthermore, although flexible forepart welt-frame 66 has been described as being more flexible in relation to rigid shock diffusion welt-frame back part 60, forepart welt-frame 66 may, in one embodiment, have the same rigidity as welt-frame back part 60, or even an elevated rigidity with respect to such back part 60.

As another example, while the manufacturing process for cushioning support system 20 has been described as utilizing a first, second, and third injection port, such injection ports may be substituted for just a single port. Thus, each "shot" of material, which is used to create the various components of cushioning support system 20, may be injected through a single port instead of multiple different injection ports.

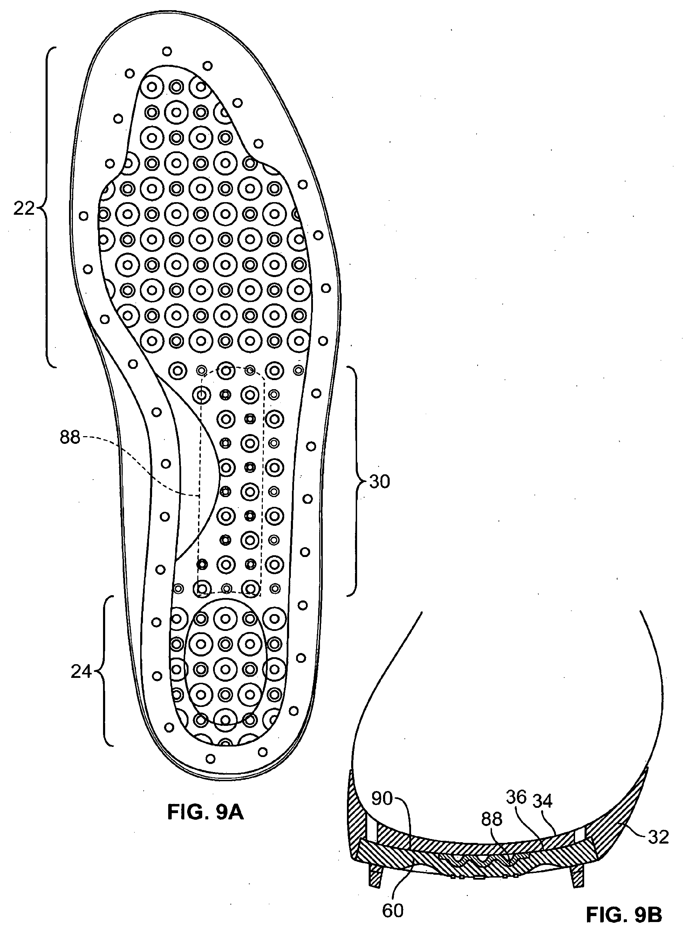

As yet another example, while cushioning support system 20 has been described as utilizing only a single torsional shank 72, it is contemplated that an additional shank 88 may be included with support system 20. In a particular embodiment, as shown in Figs. 9A and 9B, the shank 88 may be situated between the bottom surface 36 of anti-fatigue layer 32 and a top surface 90 of welt-frame back part 60. Moreover, like torsional shank 72, shank 88 may be situated within the arch region 30 of support system 20. Thus, additional support may be given to arch region 30 of support system 20 via an added shank 88. In one embodiment, shank 88 may be included in a cushioning support system 20 for use in a welted shoe, which has particular rigidity demands not otherwise required by general purpose shoes. In this regard, it is contemplated that shank 88 may be constructed of metal or of high strength plastic to provide such increased rigidity.

In a further embodiment, cushioning support system. 20 may be used in a shoe having puncture resistant properties. For example, in particular industries shoes having puncture resistant properties (*e.g*., a resistance to puncture by nails, screws, and the like) are useful. To include such properties, cushioning support system 20 as hereinbefore described may be modified such that, in one embodiment, top surface 34 of anti-fatigue layer 32 may include a series of tapered hexagonal prisms formed therein. Like cones 31, these hexagonal prisms may also provide increased cushioning and energy return for support system 20.

Further, bottom surface 36 of anti-fatigue layer 32 may be relatively flat. Stated differently, bottom surface 36 may lack the aforementioned tapered hexagonal prisms. A puncture resistant material may then be formed onto flat bottom surface 36, so as to form a puncture resistant support system 20. Thus, the puncture resistant material may prevent a nail, screw, or the like from coming into contact with a user's foot. Moreover, as noted above, the tapered hexagonal prisms formed into the top surface 34 of anti-fatigue layer 32 may provide for improved cushioning. Accordingly, an improved puncture resistant support system 20 for use in a welted shoe may be created.

### II. Protection Device(s) for Use in Shoes

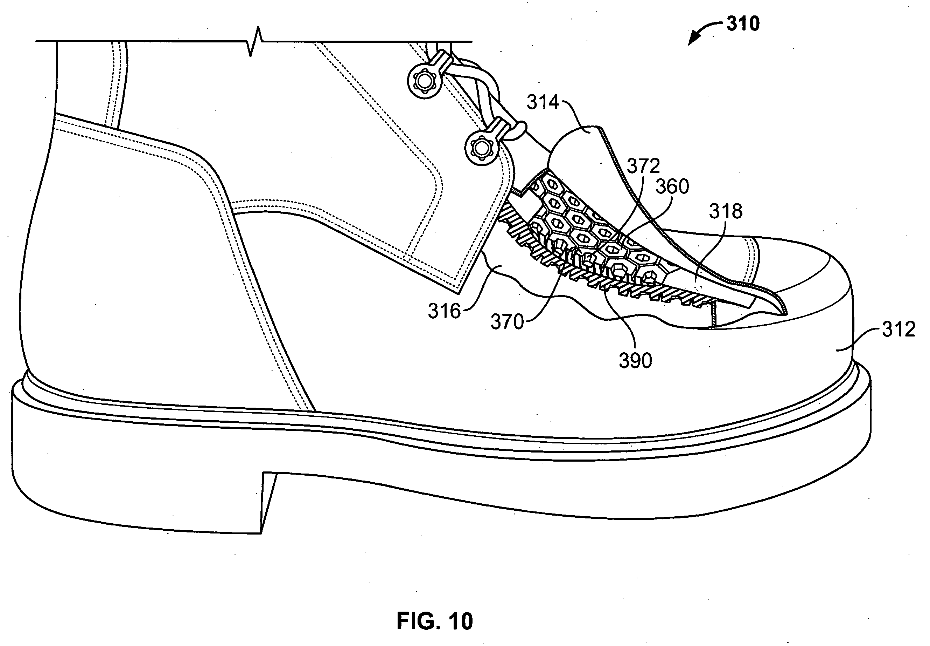

Fig. 10 depicts a shoe 310 having an internal metatarsal guard 318 not according to the invention, such guard 318 being situated between outer 314 and inner 316 layers of an upper 312 of the shoe 310. Fig. 10, at this point, serves to merely demonstrate where the various metatarsal guards detailed hereafter may be positioned in a shoe. The detailed structure of each such metatarsal guard is as follows.

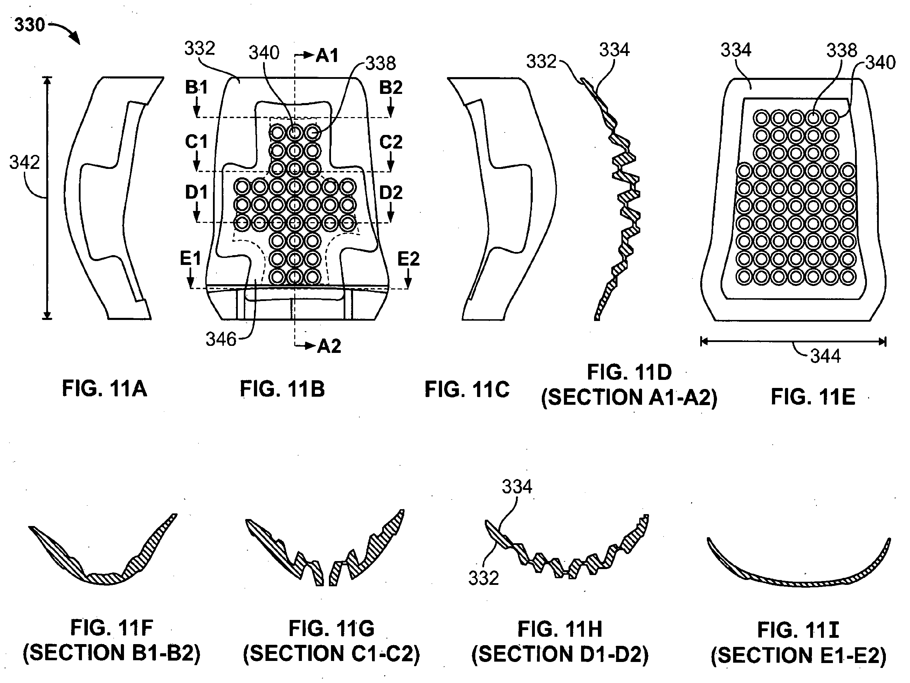

Referring to Figs. 11A-I, an internal metatarsal guard 330 not according to the invention is shown, in which the guard 330 is adapted to provide improved flexibility while maintaining adequate protection for the metatarsal region of a user's foot. As with guard 318 discussed above, internal metatarsal guard 330 may be situated between outer and inner layers of an upper of a shoe (*e.g.*, shoe 310 shown in Fig. 10) to provide protection for the foot.

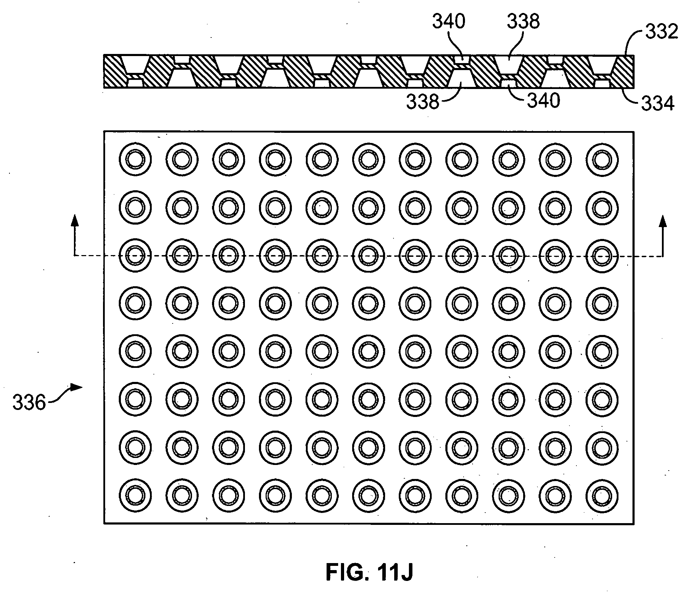

In one embodiment not according to the invention, guard 330 may include a top surface 332 and a bottom surface 334, each surface 332, 334 having a pattern of individual cones 336 formed thereon. For example, as shown in Figs. 11A-I, and particularly Fig. 11J, top surface 332 of metatarsal guard 330 may have a plurality of cones of one size 338 formed therein, and a plurality of cones of a relatively smaller size 340 extending into surface 332. Such cones 338, 340 may also alternate with one another in both a longitudinal direction 342 and a medial-lateral 344 direction. Likewise, a similar pattern of large 338 and relatively smaller cones 340 may be situated on bottom surface 334 of metatarsal guard 330, although the pattern 336 on bottom surface 334 may be offset from the pattern 336 on top surface 332. Stated differently, a substantially identical pattern 336 of cones 338, 340 may be situated on bottom surface 334; however, the pattern 336 on bottom surface 334 may be arranged such that a large cone 338 on surface 334 may be disposed directly opposite a small cone 340 on top surface 332, and vice versa. This is shown best in Figs. 11D, 11G-H, and particularly Fig. 11J. It is also contemplated that the pattern (s) 336 of cones 338, 340 on top 332 and bottom 334 surfaces may, instead of containing only two (2) cones of varying size, include three (3) or more cones each having a different size.

As shown further in Figs. 11A-I, metatarsal guard 330 may be anatomically contoured to conform to the shape of the foot. In particular, bottom surface 334 of guard 330, which may be situated against the foot during use, may be concavely shaped in the medial-lateral direction 344, and convexly shaped in the longitudinal direction 342. Thus, bottom surface 334 of guard 330 may conform to the metatarsal region of a user's foot.

In use, metatarsal guard 330 may be positioned within a shoe, similar to shoe 310 shown in Fig. 10, and may act to protect the metatarsal area of a user's foot. Thus, metatarsal guard 330 may be utilized as an internal guard in shoe 310 to protect a user's foot from falling objects or other impact events, which would otherwise injure the foot.

Other configurations of guard 330 are also contemplated. For instance, in the embodiment shown in Figs. 11A-I, the pattern of cones 336 on top surface 332 of guard 330 may, in some instances, form a cross-shape or region 346. Alternatively, such guard 330 may have a top surface 332 without a pattern of cones formed thereon (not shown). Thus, top surface 332 of guard 330 may be relatively smooth or non-patterned. In this and other embodiments, instead of a cross-shape 346 being defined by the pattern of cones 336 on top surface 332 of guard 330, a cross-shaped recess (not shown) may be formed in guard 330.

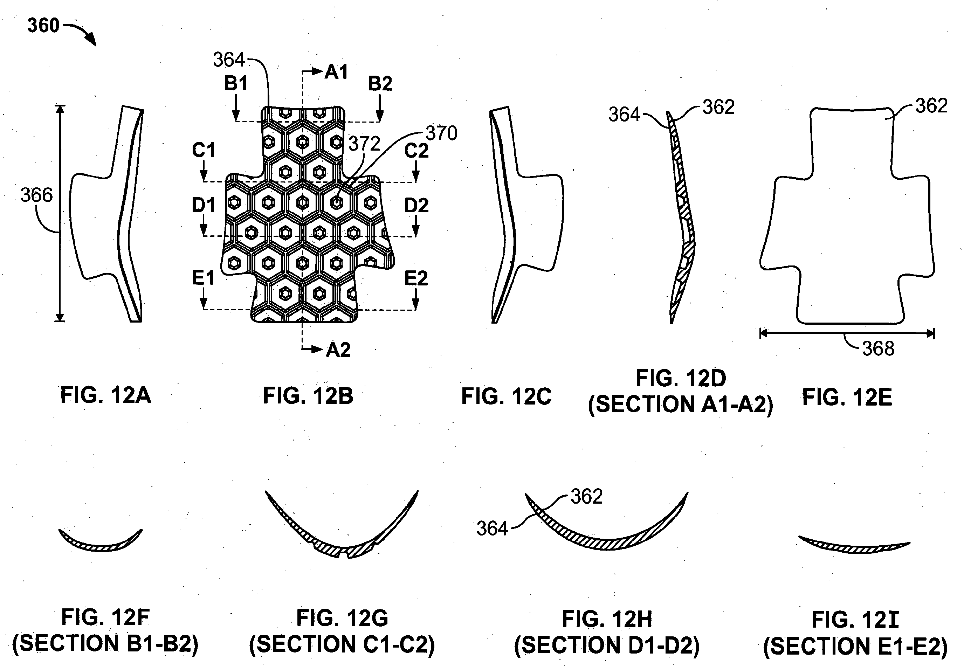

Referring now to Figs. 12A-I, an additional component, which is usable with internal metatarsal guard 330 (Figs. 11A-I), is shown. The use and construction of this added component is set forth below.

As shown in Figs. 12A-I, an added protective layer 360 may have inner 362 and outer 364 surfaces, and may be configured in a generally cross-type shape. The protective layer 360 may also be anatomically contoured to conform to the metatarsal region of the foot, similar to guard 330. Thus, inner surface 362 of protective layer 360 may be convexly shaped in a longitudinal direction 366 and concavely shaped in a medial-lateral direction 368. In a particular embodiment not according to the invention, inner surface 362 of protective layer 360 may also be adapted to abut top surface 332 of guard 330, such that protective layer 360 may overly guard 330. To be exact, the cross-shape of protective layer 360, as shown in Figs. 12B and 12E, may approximate the cross-shape 346 formed on top surface 332 of guard 330 produced via cones 338, 340. Protective layer 360 may thusly overly the cross-shape 346 on top surface 332 of guard 330 produced via cones 338, 340 and provide additional impact resistance in that area.

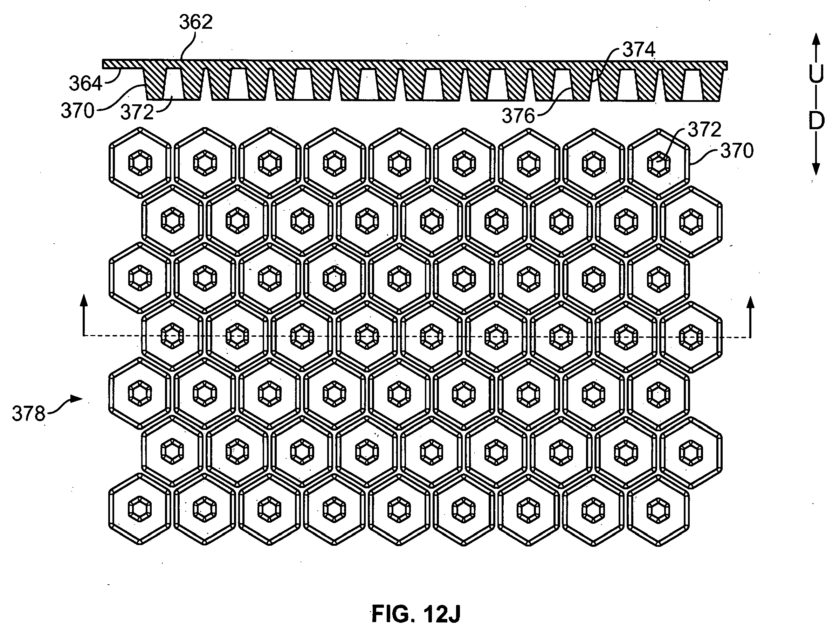

Figs. 12B, 12D, and particularly Fig. 12J depict, in detail, a hexagonal pattern 378 formed on outer surface 364 of protective layer 360. The pattern 378 may include a series of outer hexagons 370 into which a series of respective inner hexagons 372 are formed. In other words, individual outer hexagons 370 may be situated on outer surface 364 of protective layer 360 and, formed or bored into each such outer hexagon 370, may be an individual inner hexagon 372. As shown further in Fig. 12J, walls 374, 376 of outer and inner hexagons 370, 372, respectively, may also be angled in opposition to one another. In particular, while walls 374 of outer hexagons 370 are situated such that the width of the respective hexagon 370 increases as the walls 374 approach outer surface 364, walls 376 of inner hexagons 372 achieve an opposite effect (*e.g*., the width of each inner hexagon 372 decreases as walls 376 approach outer surface 364). The pattern 378 of outer 370 and inner 372 hexagons may also repeat along outer surface 364, as shown in Fig. 12J (*e.g*., successive outer and inner hexagons 370, 372 may be situated adjacent one another on outer surface 364).

The effect of the aforementioned pattern 378 of outer and inner hexagons 370, 372 may be to allow for flexion of protective layer 360 in one direction, while creating relative rigidity when protective layer 360 is bent in an opposing direction. For example, upon bending protective layer 360 outwards according to the downward facing arrow in Fig. 12J, the layer 360 may behave or react with flexibility, as the walls 374 of outer hexagons 370 may simply diverge from one another. However, upon bending protective layer 360 inwards according to the upwards facing arrow, the layer 360 may behave or react with rigidity, since adjacent walls 374 of outer hexagons 370 may converge on one another. This inward bending may also have an effect of increasing rigidity of protective layer 360 when impacted with an extraneous object (*e.g*., falling debris, a piece of lumber, etc.) In other words, with protective layer 360 bent inwards, walls 374 of outer hexagons 370 may abut one another and be somewhat precompressed, and walls 376 of inner hexagons 372 may provide a supporting structure, which resists further deflection of outer hexagons 370 (*e.g*., due to the opposing angle of walls 376). As a result, upon an extraneous object striking such protective layer 360 in the inwardly-bent orientation, the outer and inner hexagons 370, 372 may cooperate to provide rigidity and protect a user's foot from the brunt of the impact.

In some instances, the inwardly-bent state of protective layer 360 described above may be the state in which layer 360 is disposed during use. To be exact, since inner surface 362 of protective layer 360 may be convexly shaped in longitudinal direction 366 and concavely shaped in medial-lateral direction 368, protective layer 360 (or more specifically the hexagonal pattern 378 on outer surface 364 thereof) may be bent inwards, at least partially. Thus, protective layer 360 may be pre-disposed in a somewhat rigid state due to inward bending, the nature of which is detailed above. Such rigid state, however, may be sufficient to absorb the forces generated by an impact event. With inner surface 362 of protective layer 360 situated against a user's metatarsal region, protective layer 360 may therefore react with rigidity should an extraneous object strike the user's foot. Further, upon extension of the user's foot (*e.g*., during normal walking), protective layer 360 may react with flexibility since such layer 360 would bend outwards during this movement. The dynamic nature of the hexagonal pattern 378 of protective layer 360 may therefore serve to provide rigidity in instances where it is needed (*e.g*., upon impact with a potentially injuring object) and flexibility in others (e.g., during normal walking).

The above-described benefits of protective layer 360 may be incorporated into an internal metatarsal guard 330 not according to the invention through either: (1) in one embodiment, connecting inner surface 362 of such layer 360 with top surface 332 of guard 330 as shown and described with respect to Figs. 11A-I; or (2) situating protective layer 360, in an overlying relationship, on an internal metatarsal guard 330 having a smooth or non-patterned top surface 332. In other words, with respect to embodiment (2), protective layer 360 may be situated on a top surface 332 of guard 330 that does not have an alternating cone pattern 336 (*e.g*., such guard would have a relatively smooth or non-patterned surface). With respect to embodiment (1), protective layer 360 may be situated over the cross-shape pattern 346 produced via cones 338, 340 on top surface 332 of guard 330. Accordingly, there are at least three (3) embodiments of internal metatarsal guard 330 contemplated by the second invention, such embodiments being: (1) the internal metatarsal guard 330 discussed with reference to Figs. 11A-I; (2) embodiment (1) discussed above (i.e., internal metatarsal guard 330 of Figs. 11A-I with an overlying protective layer 360); and (3) embodiment (2) detailed above (i.e., internal metatarsal guard 330 having a smooth or non-patterned top surface 332 and a protective layer 360 overlying such surface).

In use, each of the aforementioned embodiments (1) to (3) of internal metatarsal guard 330 may be situated between outer and inner layers of an upper of a shoe, such as shoe 310 of Fig. 10. Thus, much like the use of the internal metatarsal guard 318 discussed above, embodiments (1) to (3) of guard 330 may provide protection for the metatarsal region of a user's foot. However, such guard(s) 330 may also provide increased flexibility and improved rigidity. In particular, the impact forces potentially experienced during use of shoe 310 may be mitigated and absorbed via guard(s) 330.

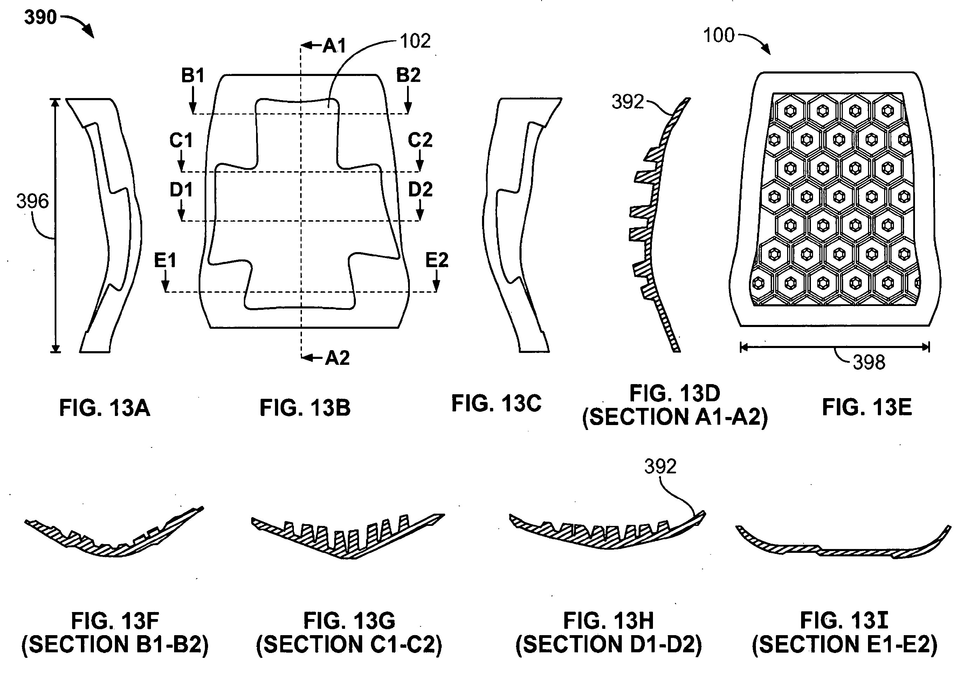

A further embodiment metatarsal guard 390 not according to the invention is shown in Figs. 13A-I. This guard 390, like guard(s) 330, may be anatomically contoured to a user's foot, in that a bottom surface 392 of the guard 390 may be convex in a longitudinal direction 396 and concave in a medial-lateral direction 398. It is also contemplated that metatarsal guard 390 may be situated between outer and inner layers of an upper of a shoe to provide protection against impact or other injuring events, and to absorb the forces generated by such events. Indeed, metatarsal guard 390, while usable by itself in some embodiments, is one component of the internal metatarsal guard 318 shown in shoe 310 of Fig. 10.

In a particular embodiment, a pattern of hexagons 100 may be situated on bottom surface 392 of metatarsal guard 390, such pattern 100 being identical to the pattern 378 shown and described with reference to Figs. 12B, 12D, and particularly Fig. 12J. Thus, bottom surface 392 of guard 390 may provide protection for the metatarsal region of a user's foot in a similar way to protective layer 360. For example, it is contemplated that the pattern of hexagons 100 on bottom surface 392 of guard 390 may be inwardly-bent in the manner described in preceding sections, thereby adapting guard 390 to provide protection akin to protective layer 360. Stated differently, as metatarsal guard 390 may be inwardly-bent in its normal orientation, such guard 390 may react with relative rigidity if impacted with an extraneous object *(e.g.,* the pattern of hexagons 100, and specifically the walls of each individual hexagon, may converge on one another once inwardly bent, and thereby provide a relatively rigid but absorptive surface with which to protect a user's metatarsal region). The rigid nature of hexagons 100 when situated in an inwardly-bent orientation is described in detail with respect to protective layer 360.

A variant of metatarsal guard 390 may include guard 390 with a protective layer 360, as shown and described with reference to Figs. 12A-J, and Fig. 10. Such layer 360 may be situated in a cross-shaped recess 102 formed in guard 390, thereby positioning inner surface 362 of protective layer 360 against the user's foot, and outer surface 364 away from the foot. With protective layer 360 added as a component to metatarsal guard 390, such guard 390 may experience improved impact resistance and thereby provide even further protection for a user. In one embodiment, protective layer 360 may be cemented or otherwise adhered to cross-shaped recess 102 formed in guard 390, providing positive impact resistance in that area. Indeed, the above-described embodiment is shown in Fig. 10 as metatarsal guard 318 (*i.e*., metatarsal guard 318 comprises guard 390 with a protective layer 360 overlying such guard 390).

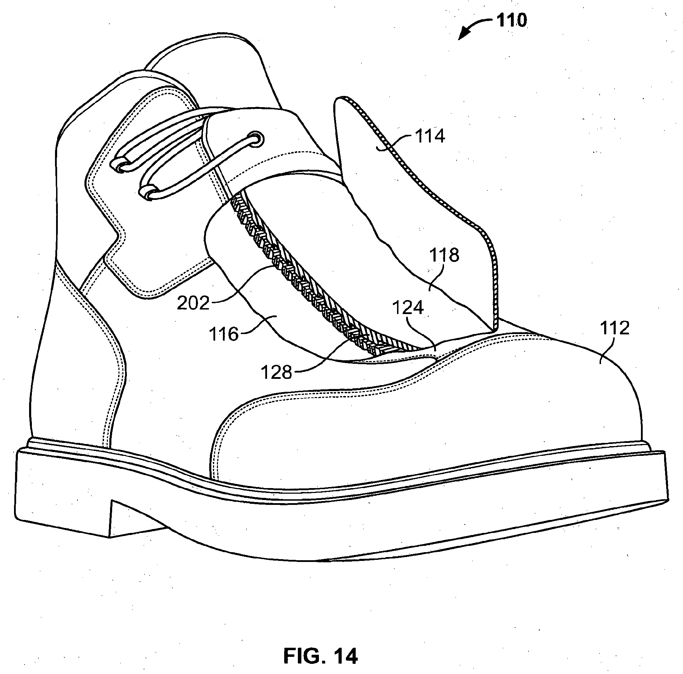

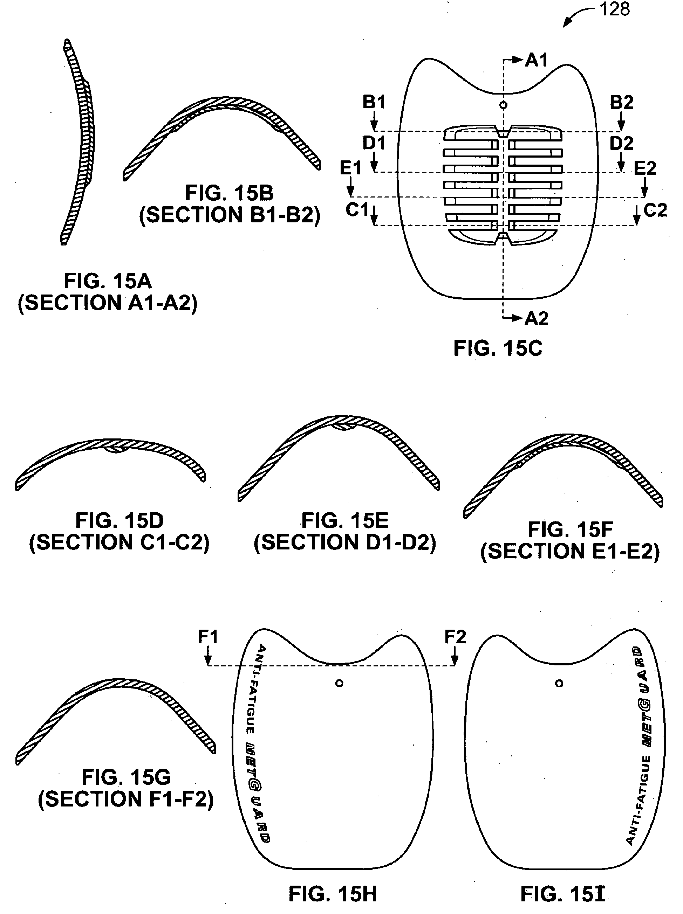

Fig. 14 depicts a shoe 110 (similar to shoe 310), except that shoe 110 includes an external metatarsal guard 118 according to the invention. Such guard 118, in Fig. 14, is situated between outer 114 and inner 116 layers of a flap 124 connected to an upper 112 of the shoe 110. As shown, flap 124 may be situated over the metatarsal area of a user's foot to provide protection therefor. Guard 118 may generally include a foam or cushioning layer (described below) and an overlying rigid layer 128, the latter being shown in detail in Figs. 15A-I and serving to provide resistance against impact forces experienced during normal use of shoe 110. External guard 118 may also conform (at least partially) to the anatomy of a user's foot in that such guard 118 may be convex in a longitudinal direction and concave in a medial-lateral direction.

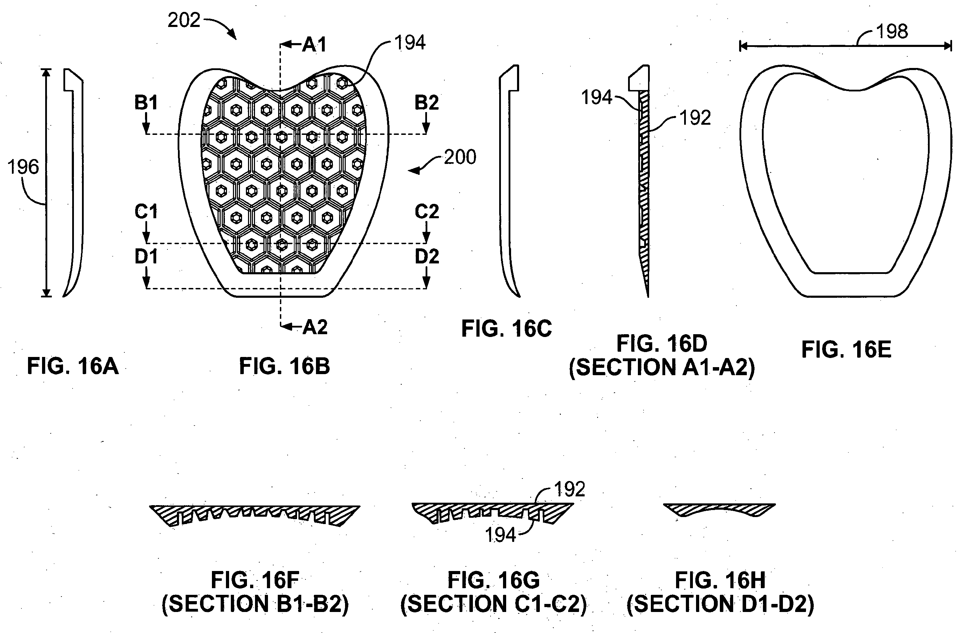

Figs. 16A-H depict an embodiment of one component 202 of external metatarsal guard 118, such component 202 being usable with shoe 110, as shown in Fig. 14. This flexible component 202 (Figs. 16A-H) may include a top surface 192 and a bottom surface 194, the bottom surface 194 being relatively straight (or in some embodiments slightly convex) in a longitudinal direction 196, and concave in a medial-lateral direction 198. Further, bottom surface 194 may include a pattern of hexagons 200, such pattern 200 being identical to the patterns 378, 100 found on protective layer 360 (Figs. 12A-J) and internal metatarsal guard 390 (Figs. 13A-I), respectively. Thus, flexible component 202 of metatarsal guard 118 may offer the same or similar protective features as found with protective layer 360 and metatarsal guard 390.

In a particular embodiment, bottom surface 194 of flexible component 202 may be situated against a user's foot, thereby resulting in inward bending of the component 202 (or more specifically the pattern of hexagons 200). In other words, due to the concave curvature of bottom surface 194 of component 202 in the medial-lateral direction 198, such component 202 may be inwardly bent once situated against a user's foot. Flexible component 202 of guard 118, in this inwardly-bent state, may therefore offer the protective qualities noted above with respect to protective layer 360 and/or internal guard 390.

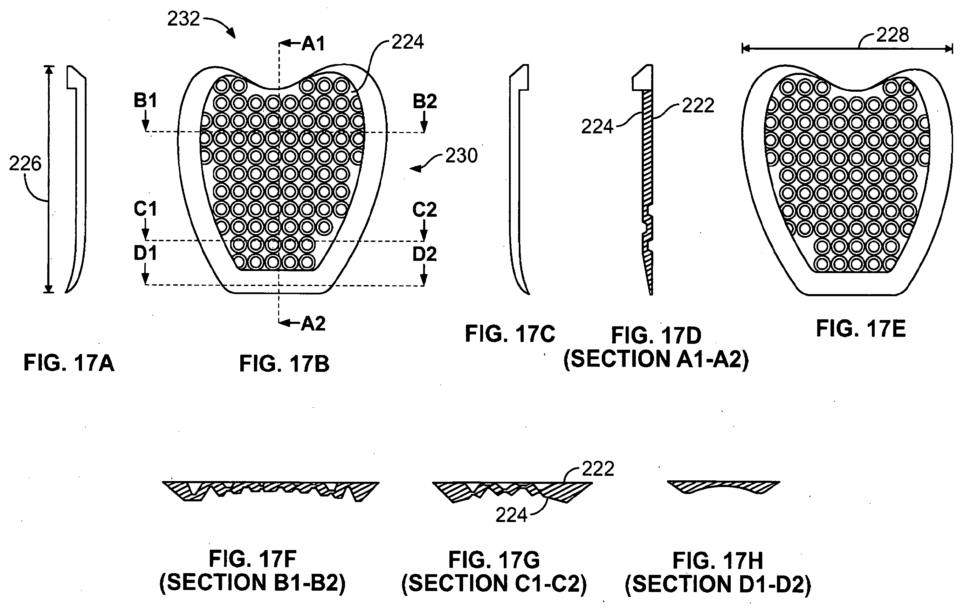

It is also contemplated that top surface 192 of flexible component 202 may be adhered or cemented to an overlying rigid layer 128, such as that shown in Figs. 17A-I, to complete external metatarsal guard 118. This construct (external guard 118 - or flexible component 202 with rigid layer 128) may also be situated within a flap 124 of a shoe, such as shoe 110 of Fig. 14. Indeed, flap 124 may contain a pocket for housing external guard 118. Such guard 118 may therefore serve to protect a user's foot from injury due to impact or other like events.

Referring now to Figs. 17A-H, a component 232 of an alternate external metatarsal guard is shown, such guard also being usable within a shoe similar to shoe 110 of Fig. 14. The flexible component 232, in this embodiment, may include top 222 and bottom 224 surfaces that are curved in the same or a similar manner as surfaces 192, 194 of external guard 118. Thus, bottom surface 224 may be relatively straight (or convexly curved, in one embodiment) in a longitudinal direction 226, and concave in a medial-lateral direction 228. Further, top 222 and bottom 224 surfaces of component 232 may include a pattern of cones 230, such pattern 230 being identical to or sharing attributes with the pattern 336 of cones 338, 340 on internal metatarsal guard 330. Flexible component 232 may therefore offer the same or similar protective qualities as internal metatarsal guard 330, although being constructed for use in an external metatarsal guard.

As with external guard 118, flexible component 232 of Figs. 17A-H, which acts as one component of the aforementioned external guard, may be cemented or otherwise adhered to rigid layer 128 of Figs. 17A-I to complete the external guard. In particular, rigid layer 128 may be cemented or otherwise adhered to top surface 222 of flexible component 232 so as to provide increased impact resistance for the metatarsal region of a user's foot. This construct (the external guard - or flexible component 232 with rigid layer 128) may be situated within flap 124 of shoe 110 during use. To be exact, the external guard of the aforementioned embodiment may be situated within a pocket in flap 124. Accordingly, such external guard may be utilized in much the same manner as guard 118 for protection of a user's metatarsal region; and thus, such use is not explicitly detailed here.

In the devices depicted in the figures, particular structures are shown that are adapted for use in a shoe, such devices serving to protect the foot of a user of the shoe. The use of alternative structures for such purposes, including structures having different lengths, shapes, and configurations is also contemplated. As an example, other variants of an internal metatarsal guard beyond those discussed above are contemplated. For instance, it is contemplated that, in place of protective layer 360 in several embodiments, may be a non-patterned and cross-shaped rigid layer (not shown). In other words, a rigid layer of material may be provided, which is roughly the same shape as protective layer 360 (Figs. 12A-J), but such layer may not include a pattern of hexagons thereon. This protective layer may, in some instances, be combined with an embodiment of internal metatarsal guard 330 shown in Figs. 11A-J. In particular, the aforementioned cross-shaped rigid layer may be combined with an internal metatarsal guard 330 having a top surface 332 that is smooth or non-patterned, such top surface 332 further including a recess (not shown) to accommodate the rigid layer. To be exact, it is contemplated that the cross-shaped rigid layer may be disposed within the recess (not shown) in guard 330 to provide additional protection against impact or other injuring events in that area.

As another example, the aforementioned cross-shaped rigid layer may be used with internal metatarsal guard 390 shown in Figs. 13A-I. Specifically, such cross-shaped rigid layer may be situated within cross-shaped recess 102 in internal metatarsal guard 390 and be cemented or otherwise adhered therein. Thus, the non-patterned rigid layer, in this embodiment, may provide increased protection for a user's foot during use.

Yet another embodiment may include substituting or replacing one of metatarsal guards 330, 390 with a non-patterned cushioning layer. Further, in these embodiments, the non-patterned cushioning layer may include, in a recess formed in the cushioning layer, a protective layer 360 according to Figs. 12A-J. Protective layer 360, due to its cross-shape, may therefore be situated within a cross-shaped recess (not shown) formed in the non-patterned cushioning layer. Other configurations of internal and external metatarsal guards beyond those noted above are also contemplated.

While not explicitly detailed in preceding sections, it is also contemplated that the internal metatarsal guard(s) discussed above may be integrally attached with the upper 312 of shoe 310, or such guard(s) may be separable therefrom. The same is true for the external guard(s) detailed above (*e.g*., such guard(s) may be integrally attached to the internal pocket of flap 124 of shoe 110 or be separable therefrom). Thus, different internal and external metatarsal guards may be substituted for one another within shoes 310, 110, respectively, thereby allowing a user the choice of which guard to use. Alternatively, as noted above, the aforementioned guards may be integrally attached with shoes 310, 110, which would not allow a user to remove or substitute guards.

As another example, although the metatarsal protection devices detailed herein are predominantly convex in a longitudinal direction and concave in a medial-lateral direction, other curvatures and shapes are contemplated. Such alternate curvatures and/or shapes may also lend themselves to providing protection for other areas of a user's foot, or for other areas of the body. Indeed, it is contemplated that aspects of the aforementioned metatarsal protection devices may be utilized in other areas of a shoe to provide protection for other areas of a user's foot, such as, for example, in the heel or side of the shoe. If used for these purposes, the metatarsal protection devices disclosed herein may be modified in shape and contour to conform to the area of the foot being protected.

Likewise, it is contemplated that aspects of the aforementioned protection devices may be used to protect other areas of a user's body, such as, for example, the knee, elbow, etc. In particular, protective devices having the different layers of material and varying patterns discussed above may situated within a housing and be adapted to overly a surface of the user's body, such that the applicable device could protect the relevant portion of the body from injury. An example of this may be a knee or elbow guard, which utilizes at least one of the embodiments discussed above for protective purposes. In this manner, a user may be provided with several protective devices that are usable to shield varying portions of the body (*e.g*., including, but not limited to, the foot, knee, elbow, etc.).

Aspects of the embodiments of figures 10-17H may also be utilized in other areas beyond footwear protection. For instance, a protective device for a cell phone, computer, or other electronic device may be manufactured using several of the concepts detailed above. To be exact, an electronic device cover may be constructed using the above-noted technology, such cover including an inner surface or pocket for housing the device, and an outer surface for protecting the device from damage. In some embodiments, the electronic device cover may be composed of foam or other material providing cushioning characteristics, and such foam or other material may include a pattern of cones or hexagons as hereinbefore described with reference to the figures.

For instance, in one embodiment, an inner surface of the electronic device cover may be relatively smooth, and an outer surface of the cover may have a pattern of cones or hexagons formed thereon to provide protection for the electronic device (*e.g*., from damage due to impact with another object, etc.) Alternatively, both the interior and exterior surfaces of the electronic device cover may include a pattern of cones or hexagons similar to that set forth above. In still another embodiment, it is contemplated that such pattern of cones or hexagons may only be formed on the interior of the cover, while the exterior may be relatively smooth. Thus, a number of combinations related to an electronic device cover are possible, the end result being a cover that protects the applicable device from damage via the various qualities of the cone and/or hexagon pattern formed on the cover. Such device cover, in some embodiments, may also conform generally to the shape of the device being protected (*e.g*., computer, iPod, cell phone, iPad, tablet, etc.)

Although aspects of the invention herein have been described with reference to particular embodiments, it is to be understood that these embodiments are merely illustrative of aspects of the present invention(s). It is therefore to be understood that numerous modifications may be made to the illustrative embodiments and that other arrangements may be devised without departing from the scope of the present invention as defined by the appended claims.

## Claims

1. A cushioning support system for use in an article of footwear, the cushioning support system having a series of components comprising:
a cushioning layer having a top surface (34) and a bottom surface (36), wherein a pattern of tapered recesses is formed into at least one of the top and bottom surfaces;
a welt-frame assembly attached to the bottom surface of the cushioning layer, the welt-frame assembly having a rear part (60) and a separate forepart (66); and
a flexible ply rib (76) connected to a periphery of the cushioning support system for securing to a welt,
wherein the cushioning support system includes toe (22), heel (24), and arch (30) regions and a longitudinal and lateral axis, the longitudinal axis extending from the toe region to the heel region and the lateral axis extending transverse to the longitudinal axis.

2. The cushioning support system of claim 1, wherein the pattern of tapered recesses includes frustum-shaped recesses formed into the at least one of the top and bottom surfaces of the cushioning layer, the pattern having a first frustum-shaped recess with a first depth and width and a second frustum-shaped recess with a second depth and width, each depth and width being different.

3. The cushioning support system of claim 2, wherein the frustum-shaped recesses include a first series of alternating first and second frustum-shaped recesses extending along the lateral axis of the support system, and a second series of alternating first and second frustum-shaped recesses extending along the longitudinal axis of the support system.

4. The cushioning support system of claim 2, wherein the first frustum-shaped recess extends into the top surface of the cushioning layer and the second frustum-shaped recess extends into the bottom surface of the cushioning layer, the second frustum-shaped recess being inverted with respect to the first frustum-shaped recess.

5. The cushioning support system of claim 2, wherein the first and second frustum-shaped recesses are defined by a generally frustoconical region terminating in a circular end, and the circular end of the first frustum-shaped recess is adjacent the circular end of the second frustum-shaped recess.

6. The cushioning support system of any one of the preceding claims, wherein the welt-frame rear part includes an opening (62) for insertion over a heel patch of the bottom surface of the cushioning layer, such that a portion of the heel patch extends through the opening.

7. The cushioning support system of any one of the preceding claims, wherein the welt-frame rear part is more rigid than the welt-frame forepart, the welt-frame rear part extending through the arch region and into the heel region of the support system to provide support through the arch and heel regions.

8. The cushioning support system of any one of the preceding claims, wherein the welt-frame forepart includes an opening (68) for insertion over a toe patch of the bottom surface of the cushioning layer, such that a portion of the toe patch extends through the opening, and the welt-frame forepart is more flexible than the welt-frame rear part to provide flexibility in the toe region.

9. The cushioning support system of any one of the preceding claims, wherein the flexible ply rib extends from a bottom surface of the welt-frame rear and foreparts, the ply rib including a flange extending about a periphery of the support system.

10. The cushioning support system of any one of the preceding claims, further comprising a torsional shank (72) associated with the welt-frame assembly rear part, the torsional shank being situated in the arch and heel regions of the support system to provide added support to the arch and heel regions.

11. The cushioning support system of claim 10, wherein the torsional shank has a Y-shape for augmenting the torsional stability of the shank.

12. The cushioning support system of any one of the preceding claims, further comprising a second shank (88) situated between the bottom surface of the cushioning layer and a top surface of the welt-frame rear part.

13. The cushioning support system of any one of the preceding claims, wherein the pattern of tapered recesses is formed into both the top and bottom surfaces of the cushioning layer, the pattern including hexagonally-shaped recesses.

14. The cushioning support system according to any one of the preceding claims, wherein each of the frustum-shaped recesses has a substantially continuous internal wall surface defining the frustum shape of each recess, and a first one of the frustum-shaped recesses extends into the top surface of the cushioning layer while a second one of the frustum-shaped recesses extends into the bottom surface of the cushioning layer, the second frustum-shaped recess being inverted with respect to the first frustum-shaped recess, and wherein the cushioning support system is a sole element shaped according to the perimeter of a foot, such that the cushioning support system is adapted for use in the article of footwear.

15. A shoe comprising:
a cushioning support according to any one of the preceding claims; and
a welt secured to the flexible ply rib and attached to an upper of the shoe.

## Patentansprüche

1. Polsterndes Stützsystem für die Verwendung in einem Fußbekleidungsartikel, wobei das polsternde Stützsystem eine Reihe von Komponenten hat, umfassend:
eine Polsterschicht mit einer oberen Fläche (34) und einer unteren Fläche (36), wobei in der oberen und/oder der unteren Fläche ein Muster aus sich verjüngenden Aussparungen ausgebildet ist,
eine Kederrahmenanordnung, die an der unteren Fläche der Polsterschicht angebracht ist, wobei die Kederrahmenanordnung einen hinteren Teil (60) und einen getrennten Vorderteil (66) hat, und
eine flexible Faltenrippe (76), die zur Befestigung an einem Keder mit einem Umfang des polsternden Stützsystems verbunden ist,
wobei das polsternde Stützsystem einen Zehen-(22), einen Fersen- (24) und einen Fußgewölbebereich (30) und eine Längs- und eine Seitenachse aufweist, wobei sich die Längsachse vom Zehenbereich zum Fersenbereich erstreckt und sich die Seitenachse quer zur Längsachse erstreckt.

2. Polsterndes Stützsystem nach Anspruch 1, wobei das Muster aus sich verjüngenden Aussparungen kegelstumpfförmige Aussparungen aufweist, die in der oberen und/oder der unteren Fläche der Polsterschicht ausgebildet sind, wobei das Muster eine erste kegelstumpfförmige Aussparung mit einer ersten Tiefe und Breite und eine zweite kegelstumpfförmige Aussparung mit einer zweiten Tiefe und Breite hat, wobei jede Tiefe und Breite unterschiedlich ist.

3. Polsterndes Stützsystem nach Anspruch 2, wobei die kegelstumpfförmigen Aussparungen eine erste Reihe von abwechselnden ersten und zweiten kegelstumpfförmigen Aussparungen, die sich entlang der Seitenachse des Stützsystems erstrecken, und eine zweite Reihe von abwechselnden ersten und zweiten kegelstumpfförmigen Aussparungen, die sich entlang der Längsachse des Stützsystems erstrecken, aufweisen.

4. Polsterndes Stützsystem nach Anspruch 2, wobei sich die erste kegelstumpfförmige Aussparung in die obere Fläche der Polsterschicht erstreckt und sich die zweite kegelstumpfförmige Aussparung in die untere Fläche der Polsterschicht erstreckt, wobei die zweite kegelstumpfförmige Aussparung bezüglich der ersten kegelstumpfförmigen Aussparung umgekehrt ist.

5. Polsterndes Stützsystem nach Anspruch 2, wobei die ersten und zweiten kegelstumpfförmigen Aussparungen durch einen allgemein kegelstumpfförmigen Bereich definiert sind, der in einem kreisförmigen Ende endet, und das kreisförmige Ende der ersten kegelstumpfförmigen Aussparung dem kreisförmigen Ende der zweiten kegelstumpfförmigen Aussparung benachbart ist.

6. Polsterndes Stützsystem nach einem der vorhergehenden Ansprüche, wobei der hintere Teil des Kederrahmens eine Öffnung (62) zum Einführen über einen Fersenlappen der unteren Fläche der Polsterschicht aufweist, so dass sich ein Abschnitt des Fersenlappens durch die Öffnung erstreckt.

7. Polsterndes Stützsystem nach einem der vorhergehenden Ansprüche, wobei der hintere Teil des Kederrahmens starrer als der Vorderteil des Kederrahmens ist, wobei sich der hintere Teil des Kederrahmens durch den Fußgewölbebereich und in den Fersenbereich des Stützsystems erstreckt, um Stützung durch den Fußgewölbe- und den Fersenbereich bereitzustellen.

8. Polsterndes Stützsystem nach einem der vorhergehenden Ansprüche, wobei der Vorderteil des Kederrahmens eine Öffnung (68) zum Einführen über einen Zehenlappen der unteren Fläche der Polsterschicht aufweist, so dass sich ein Abschnitt des Zehenlappens durch die Öffnung erstreckt, und der Vorderteil des Kederrahmens flexibler als der hintere Teil des Kederrahmens ist, um Flexibilität im Zehenbereich bereitzustellen.

9. Polsterndes Stützsystem nach einem der vorhergehenden Ansprüche, wobei sich die flexible Faltenrippe von einer unteren Fläche des hinteren und des Vorderteils des Kederrahmens erstreckt, wobei die Faltenrippe einen Flansch aufweist, der sich um einen Umfang des Stützsystems erstreckt.

10. Polsterndes Stützsystem nach einem der vorhergehenden Ansprüche, ferner umfassend einen dem hinteren Teil der Kederrahmenanordnung zugeordneten Torsionsschaft (72), wobei der Torsionsschaft in dem Fußgewölbe- und dem Fersenbereich des Stützsystems angeordnet ist, um zusätzliche Stützung des Fußgewölbe- und des Fersenbereichs bereitzustellen.

11. Polsterndes Stützsystem nach Anspruch 10, wobei der Torsionsschaft Y-förmig ist, um die Torsionsstabilität des Schafts zu erhöhen.

12. Polsterndes Stützsystem nach einem der vorhergehenden Ansprüche, ferner umfassend einen zweiten Schaft (88), der zwischen der unteren Fläche der Polsterschicht und einer oberen Fläche des hinteren Teils des Kederrahmens angeordnet ist.

13. Polsterndes Stützsystem nach einem der vorhergehenden Ansprüche, wobei das Muster aus sich verjüngenden Aussparungen sowohl in der oberen als auch in der unteren Fläche der Polsterschicht ausgebildet ist, wobei das Muster hexagonförmige Aussparungen aufweist.

14. Polsterndes Stützsystem nach einem der vorhergehenden Ansprüche, wobei jede der kegelstumpfförmigen Aussparungen eine im Wesentlichen durchgehende innere Wandfläche hat, die die Kegelstumpfform jeder Aussparung definiert, und sich eine erste der kegelstumpfförmigen Aussparungen in die obere Fläche der Polsterschicht erstreckt, während sich eine zweite der kegelstumpfförmigen Aussparungen in die untere Fläche der Polsterschicht erstreckt, wobei die zweite kegelstumpfförmige Aussparung bezüglich der ersten kegelstumpfförmigen Aussparung umgekehrt ist, und wobei das polsternde Stützsystem ein Sohlenelement ist, das gemäß dem Umfang eines Fußes gestaltet ist, so dass das polsternde Stützsystem für die Verwendung in dem Fußbekleidungsartikel geeignet ist.

15. Schuh, umfassend:
eine polsternde Stütze nach einem der vorhergehenden Ansprüche und
einen Keder, der an der flexiblen Faltenrippe befestigt und an einem Obermaterial des Schuhs angebracht ist.

## Revendications

1. Système de support de matelassage à utiliser dans un article de chaussure, le système de support de matelassage comprenant une série de composants, comprenant:
une couche de matelassage présentant une surface supérieure (34) et une surface inférieure (36), dans lequel un motif d'évidements coniques est formé dans au moins une des surfaces supérieure et inférieure;
un ensemble de cadre de trépointe attaché à la surface inférieure de la couche de matelassage, l'ensemble de cadre de trépointe comprenant une partie arrière (60) et une partie avant séparée (66); et
un mur d'épaisseur souple (76) connecté à une périphérie du système de support de matelassage à fixer à une trépointe,
dans lequel le système de support de matelassage comprend des régions d'orteils (22), de talon (24) et de voûte (30) ainsi qu'un axe longitudinal et un axe latéral, l'axe longitudinal s'étendant à partir de la région d'orteils jusqu'à la région de talon et l'axe latéral s'étendant transversalement à l'axe longitudinal.

2. Système de support de matelassage selon la revendication 1, dans lequel le motif d'évidements coniques comprend des évidements en forme de tronc formés dans au moins une des surfaces supérieure et inférieure de la couche de matelassage, le motif présentant un premier évidement en forme de tronc affichant des premières profondeur et largeur et un deuxième évidement en forme de tronc affichant des deuxièmes profondeur et largeur, chaque profondeur et largeur étant différentes.

3. Système de support de matelassage selon la revendication 2, dans lequel les évidements en forme de tronc comprennent une première série de premiers et deuxièmes évidements en forme de tronc alternés qui s'étendent le long de l'axe latéral du système de support, et une deuxième série de premiers et deuxièmes évidements en forme de tronc alternés qui s'étendent le long de l'axe longitudinal du système de support.

4. Système de support de matelassage selon la revendication 2, dans lequel le premier évidement en forme de tronc s'étend dans la surface supérieure de la couche de matelassage, et le deuxième évidement en forme de tronc s'étend dans la surface inférieure de la couche de matelassage, le deuxième évidement en forme de tronc étant inversé par rapport au premier évidement en forme de tronc.

5. Système de support de matelassage selon la revendication 2, dans lequel les premier et deuxième évidements en forme de tronc sont définis par une région essentiellement tronconique qui se termine en une extrémité circulaire, et l'extrémité circulaire du premier évidement en forme de tronc est adjacente à l'extrémité circulaire du deuxième évidement en forme de tronc.

6. Système de support de matelassage selon l'une quelconque des revendications précédentes, dans lequel le cadre de trépointe comporte une ouverture (62) pour une insertion sur une pièce de talon de la surface inférieure de la couche de matelassage, de telle sorte qu'une partie de la pièce de talon s'étende à travers l'ouverture.

7. Système de support de matelassage selon l'une quelconque des revendications précédentes, dans lequel la partie arrière de cadre de trépointe est plus rigide que la partie avant de cadre de trépointe, la partie arrière de cadre de trépointe s'étendant à travers la région de voûte et dans la région de talon du système de support afin d'assurer un support à travers les régions de voûte et de talon.

8. Système de support de matelassage selon l'une quelconque des revendications précédentes, dans lequel la partie avant de cadre de trépointe comporte une ouverture (68) pour une insertion sur une pièce d'orteils de la surface inférieure de la couche de matelassage, de telle sorte qu'une partie de la pièce d'orteils s'étende à travers l'ouverture, et la partie avant de cadre de trépointe est plus souple que la partie arrière de cadre de trépointe dans le but d'apporter de la flexibilité dans la région d'orteils.

9. Système de support de matelassage selon l'une quelconque des revendications précédentes, dans lequel le mur d'épaisseur souple s'étend à partir d'une surface inférieure des parties avant et arrière de cadre de trépointe, le mur d'épaisseur comprenant une bride s'étendant autour d'une périphérie du système de support.

10. Système de support de matelassage selon l'une quelconque des revendications précédentes, comprenant en outre un cambrion torsionnel (72) associé à la partie arrière d'ensemble de cadre de trépointe, le cambrion torsionnel étant situé dans les régions de voûte et de talon du système de support afin d'assurer un support accru dans les régions de voûte et de talon.

11. Système de support de matelassage selon la revendication 10, dans lequel le cambrion torsionnel présente une forme de Y afin d'augmenter la stabilité en torsion du cambrion.

12. Système de support de matelassage selon l'une quelconque des revendications précédentes, comprenant en outre un deuxième cambrion (88) qui est situé entre la surface inférieure de la couche de matelassage et une surface supérieure de la partie arrière de cadre de trépointe.

13. Système de support de matelassage selon l'une quelconque des revendications précédentes, dans lequel le motif d'évidements coniques est formé à la fois dans la surface supérieure et dans la surface inférieure de la couche de matelassage, le motif comprenant des évidements de forme hexagonale.

14. Système de support de matelassage selon l'une quelconque des revendications précédentes, dans lequel chacun des évidements en forme de tronc présente une surface de paroi interne sensiblement continue qui définit la forme tronquée de chaque évidement, et un premier des évidements en forme de tronc s'étend dans la surface supérieure de la couche de matelassage, alors qu'un deuxième des évidements en forme de tronc s'étend dans la surface inférieure de la couche de matelassage, le deuxième évidement en forme de tronc étant inversé par rapport au premier évidement en forme de tronc, et dans lequel le système de support de matelassage est un élément de semelle configuré selon le périmètre d'un pied, de telle sorte que le système de support de matelassage soit apte à être utilisé dans l'article de chaussure.

15. Chaussure, comprenant:
un support de matelassage selon l'une quelconque des revendications précédentes; et
une trépointe fixée au mur d'épaisseur souple et attachée à une tige de la chaussure.
